(19) Europäisches Patentamt
European Patent Office
Office européen des brevets

(11) **EP 3 249 426 B1**

(12) **EUROPÄISCHE PATENTSCHRIFT**

(45) Veröffentlichungstag und Bekanntmachung des Hinweises auf die Patenterteilung:
**27.11.2019 Patentblatt 2019/48**

(51) Int Cl.:
***G01S 13/90*** *(2006.01)*     ***G01S 13/22*** *(2006.01)*

(21) Anmeldenummer: **17171449.6**

(22) Anmeldetag: **17.05.2017**

(54) **SYNTHETIK-APERTUR-RADARVERFAHREN**

SYNTHETICS APERTURE RADAR METHOD

PROCÉDÉ DE RADAR À SYNTHÈSE D'OUVERTURE

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **23.05.2016 DE 102016208899**

(43) Veröffentlichungstag der Anmeldung:
**29.11.2017 Patentblatt 2017/48**

(73) Patentinhaber: **Deutsches Zentrum für Luft- und Raumfahrt e.V.**
**51147 Köln (DE)**

(72) Erfinder:
• **Queiroz de Almeida, Felipe**
**80687 München (DE)**
• **Younis, Marwan**
**82234 Weßling (DE)**
• **Krieger, Gerhard**
**82131 Gauting (DE)**
• **Lopez-Dekker, Francisco**
**2623 AS Delft (NL)**
• **Moreira, Alberto**
**82140 Olching (DE)**

(74) Vertreter: **Fink Numrich**
**Patentanwälte PartmbB**
**European Patent and Trademark Attorneys**
**Wendl-Dietrich-Straße 14**
**80634 München (DE)**

(56) Entgegenhaltungen:
**DE-A1-102005 062 031     DE-A1-102012 219 225**

• **GERHARD KRIEGER ET AL: "Advanced Concepts for High-Resolution Wide-Swath SAR Imaging", 8TH EUROPEAN CONFERENCE ON SYNTHETIC APERTURE RADAR, 7. Juni 2010 (2010-06-07), Seiten 524-527, XP055081469, Aachen, Germany ISBN: 978-3-80-073272-2**
• **CHEN QIAN ET AL: "A novel ultra-wide swath SAR based on variable PRF and digital beamforming", IET INTERNATIONAL RADAR CONFERENCE 2013, 16. April 2013 (2013-04-16), Seiten 0081-0081, XP055196376, DOI: 10.1049/cp.2013.0128 ISBN: 978-1-84-919603-1**
• **CHEN QIAN ET AL: "Investigation on an ultra-wide-swath, multipleelevation-beam SAR based on sweep-PRI", IEEE TRANSACTIONS ON AEROSPACE AND ELECTRONIC SYSTEMS, IEEE SERVICE CENTER, PISCATAWAY, NJ, US, Bd. 50, Nr. 4, 1. Oktober 2014 (2014-10-01), Seiten 2998-3020, XP011567341, ISSN: 0018-9251, DOI: 10.1109/TAES.2014.110528 [gefunden am 2014-12-05]**

**Beschreibung**

Die Erfindung betrifft ein Synthetik-Apertur-Radarverfahren zur Fernerkundung der Erdoberfläche sowie eine entsprechende Synthetik-Apertur-Radarvorrichtung.

Synthetik-Apertur-Radarverfahren, welche auch als SAR-Verfahren bezeichnet werden, ermöglichen die Fernerkundung der Erdoberfläche über die Erfassung von an der Erdoberfläche reflektierten Radarpulsen, die von einem Radarsystem ausgesendet werden, welches sich auf einer Plattform mit konstanter Geschwindigkeit über der Erdoberfläche in einer sog. Azimut-Richtung bewegt. Der Begriff der Erdoberfläche ist dabei weit zu verstehen und kann gegebenenfalls auch die Oberfläche eines anderen Himmelskörpers (vorzugsweise eines anderen Planeten) als der Erde betreffen.

Bei SAR-Radarverfahren macht man sich die Erkenntnis zunutze, dass aufgrund der bewegten Plattform die gleichen Bereiche der Erde bzw. eines Himmelskörpers in unterschiedlichen Positionen erfasst werden, wodurch eine Amplituden- und Phaseninformation und schließlich ein Radarbild der Erdoberfläche erhalten werden kann. Es wird somit eine synthetische Apertur in Azimut-Richtung erzeugt, wobei hier und im Folgenden unter Apertur immer die Apertur in Azimut-Richtung zu verstehen ist, sofern nichts Gegenteiliges ausgeführt wird.

In einem Einzel-Apertur-SAR-System wird ein Empfänger an einer einzelnen Azimut-Position zur Erfassung des Radarechos zu jeweiligen Empfangszeitpunkten benutzt. Bei einem Betrieb eines solchen Systems mit konstanter Pulswiederholrate ist es dabei nachteilhaft, dass die Breite des über das Radarsystem erfassbaren Streifens auf der Erdoberfläche in Richtung senkrecht zur Azimut-Richtung begrenzt ist. Dies liegt daran, dass sog. blinde Bereiche (englisch: blind ranges) auftreten, für welche der Empfang eines Radarechos nicht möglich ist, da zum Empfangszeitpunkt des Radarechos gerade ein neuer Radarpuls ausgesendet wird. Die Breite eines erfassten Streifens bis zu einem blinden Bereich kann durch Verlängerung des Pulswiederholintervalls der ausgesendeten Radarpulse zwar vergrößert werden. Dies geht jedoch auf Kosten der Auflösung in Azimut-Richtung.

Zur Erhöhung der Azimut-Auflösung von SAR-Radarsystemen sind sog. Multi-Apertur-Radarsysteme bekannt, bei denen durch mehrere Empfänger, die in Azimut-Richtung versetzt zueinander angeordnet sind, Radarechos von der Erdoberfläche erfasst werden. Multi-Apertur-Radarsysteme weisen dabei eine konstante Pulswiederholrate auf, was wiederum zur Blockierung von Radarechos in durchgängigen blinden Bereichen führt.

Zur Vermeidung von durchgehenden blinden Bereichen ist es für Einzel-Apertur-SAR-Systeme bekannt, die Radarpulse mit einer sich verändernden Pulswiederholrate zu variieren, so dass blockierte Pulse nicht immer an der gleichen Position in Richtung senkrecht zur Azimut-Richtung auftreten. Solche Systeme sind auch unter dem Begriff "staggered SAR" bekannt. Durch die variable Pulswiederholrate werden Signale mit ungleichmäßigen Abtastungen in Azimut-Richtung erhalten. Solche Signale sind bei der Auswertung der SAR-Daten nicht brauchbar, da bei der Weiterverarbeitung der Signale im Frequenzbereich gleichmäßige Abtastwerte benötigt werden. Deshalb werden für Einzel-Apertur-SAR-Systeme Interpolationstechniken vorgeschlagen, um die Abtastwerte in gleichmäßige Abtastungen zu wandeln. Darüber hinaus gibt es für Einzel-Apertur-Systeme mit variierender Pulswiederholrate den Ansatz, dass die Radarechos an unterschiedlichen relativen Empfangspositionen in Azimut-Richtung in Bezug zur Plattform empfangen werden, um hierdurch Abtastungen mit konstantem räumlichem Abstand in Azimut-Richtung zu erreichen.

Die Interpolationsmethoden, welche in Einzel-Apertur-SAR-Systemen mit variabler Pulswiederholrate verwendet werden, können aufgrund der Mehrzahl von Empfangskanälen bzw. Empfängern nicht auf Multi-Apertur-SAR-Systeme übertragen werden. Es gibt somit bis dato keine Multi-Apertur-SAR-Systeme, die mit variabler Pulswiederholrate betrieben werden.

Die Druckschrift Gerhard Krieger et al.: "Advanced Concepts for High-Resolution Wide-Swath SAR Imaging", 8th European Conference on Synthetic Aperture Radar, 7. Juni 2010, S. 524-527, beschreibt SAR-Systeme, welche die Erfassung eines breiten Streifens auf der Erdoberfläche mit hoher Auflösung ermöglichen.

In dem Dokument Liu Yadong et al.: "A novel ultra-wide swath SAR based on variable PRF and digital beamforming", IET International Radar Conference, 16. April 2013, S. 0081-0081, wird ein SAR-Radarsystem basierend auf einer Reflektorantenne beschrieben. Dabei werden mehrere Empfangskanäle in Elevation sowie eine variable Pulswiederholrate und digitale Strahlformung genutzt.

In dem Dokument Qian Chen et al.: "Investigation on an ultra-wide-swath, multipleelevation-beam SAR based on sweep-PRI", IEEE Transactions on Aerospace and Electronic Systems, Bd. 50, Nr. 4, 1. Oktober 2014, S. 2998-3020, wird ein SAR-System mit einer dreidimensionalen Wellenformkodierung in Elevation beim Aussenden der Radarpulse und einer digitalen Strahlformung beim Empfangen der Radarechos offenbart.

Das Dokument DE 10 2012 219 225 A1 offenbart ein Synthetik-Apertur-Radarverfahren mittels eines Einzel-Apertur-Radarsystems auf einer Plattform, wobei die Pulswiederholrate variiert wird. Ferner werden die relativen Sendepositionen der Radarpulse und/oder die relativen Empfangspositionen der Radarechos in Azimut-Richtung in Bezug auf die Plattform variiert.

Das Dokument DE 10 2005 062 031 A1 offenbart eine Synthetik-Apertur-Radar-vorrichtung, welche eine Empfangsantenne mit mehreren in Elevation angeordneten Subaperturen aufweist, wobei Radarpulse in ungleichmäßigen Zeitabständen ausgesendet werden.

Aufgabe der Erfindung ist es, ein Synthetik-Apertur-Radarverfahren und eine entsprechende Radarvorrichtung zu schaffen, welche mehrere Aperturen aufweist und einen Betrieb mit variabler Pulswiederholrate ermöglicht.

Diese Aufgabe wird durch das Verfahren gemäß Patentanspruch 1 bzw. die Vorrichtung gemäß Patentanspruch 11 gelöst. Weiterbildungen der Erfindung sind in den abhängigen Ansprüchen definiert.

Das erfindungsgemäße Synthetik-Apertur-Radarverfahren dient zur Fernerkennung der Erdoberfläche über ein Multi-Apertur-Radarsystem auf einer Plattform, die sich in eine Azimut-Richtung über der Erdoberfläche bewegt. Wie bereits oben erwähnt, sind die mehreren Aperturen dabei in Azimut-Richtung ausgebildet. Das Multi-Apertur-Radarsystem umfasst eine kombinierte Sende- und Empfangseinrichtung, welche im Sendebetrieb eine Sendeeinrichtung ist, die Radarpulse aussendet, und welche im Empfangsbetrieb eine Empfangseinrichtung ist, die an der Erdoberfläche reflektierte Radarechos dieser Radarpulse über mehrere Empfangskanäle mit zugeordneten Empfängern bzw. Antennenelementen empfängt, wobei die Empfänger der Empfangskanäle auf der Plattform (zumindest) in Azimut-Richtung versetzt zueinander angeordnet sind. Einem jeweiligen Empfangskanal für jedes durch diesen empfangene Radarecho, welches aus der gleichen Range-Position in einer Range-Richtung stammt (d.h. an der gleichen Range-Position reflektiert wurde), ist dabei ein Antennendiagramm mit einem Phasenzentrum an einer Azimut-Position in Azimut-Richtung zugeordnet. Die Range-Richtung verläuft entlang der Erdoberfläche senkrecht zur Azimut-Richtung. Das Phasenzentrum beschreibt den Referenzpunkt des entsprechenden Antennendiagramms, d.h. den Punkt, an dem die Antennenstrahlung für Empfangsorte auf der Erdoberfläche auszugehen scheint. Es existiert für eine entsprechende Range-Position, aus der Radarechos empfangen werden, ein Antennendiagramm für jede Kombination aus Empfangskanal und empfangenem Radarecho. Die Antennendiagramme für den gleichen Empfangskanal für unterschiedliche Radarechos aus der gleichen Range-Position unterscheiden sich vorzugsweise nur in der Position des Phasenzentrums.

Im Falle eines Multi-Apertur-Systems mit einem gemeinsamen Reflektor für alle Empfänger empfängt jeder Empfangskanal Radarechos aus einem vorgegebenen Bereich auf der Erdoberfläche mit fester Relativposition zur Plattform, wobei die vorgegebenen Bereiche der Empfangskanäle in Azimut-Richtung nebeneinander liegen. Aufgrund des Reflektors liegen die Phasenzentren der Antennendiagramme der einzelnen Empfangskanäle in der Regel an der gleichen Azimut-Position. Im Falle eines Multi-Apertur-Systems mit Empfängern in der Form von planaren Antennen empfängt jeder Empfangskanal Radarechos aus dem gleichen vorgegebenen Bereich auf der Erdoberfläche, jedoch über Antennendiagramme mit Phasenzentren, die auf der Plattform in Azimut-Richtung versetzt zueinander angeordnet sind.

Im erfindungsgemäßen Verfahren werden durch die Sendeeinrichtung zu aufeinander folgenden Sendezeitpunkten Radarpulse ausgesendet, wobei die Zeitintervalle zwischen aufeinander folgenden Sendezeitpunkten zumindest manchmal variieren. D.h., das Multi-Apertur-Radarsystem weist eine variable Pulswiederholrate auf. Die Radarechos der Radarpulse werden durch die Empfangseinrichtung über die jeweiligen Empfangskanäle empfangen, wodurch für die Radarechos, welche aus der gleichen Range-Position stammen, erste Abtastwerte für diese Range-Position erhalten werden, welche jeweils einem Empfangskanal für ein empfangenes Radarecho entsprechen. Ein jeweiliger erster Abtastwert ist dabei dem Phasenzentrum des Antennendiagramms des entsprechenden Empfangskanals für das empfangene Radarecho zugeordnet. Es existieren somit für eine oder mehrere Range-Positionen, aus denen Radarechos empfangen werden, jeweils erste Abtastwerte für alle Empfangskanäle und empfangene Radarechos.

Im Rahmen des erfindungsgemäßen Verfahrens werden die ersten Abtastwerte für die gleiche Range-Position in zweite Abtastwerte für diese Range-Position umgerechnet. Die nachfolgenden Ausführungen beziehen sich immer auf Größen für die gleiche Range-Position, sofern nichts anderes ausgeführt wird. Insbesondere stammen die Radarechos aus der gleichen Range-Position und beziehen sich die Antennendiagramme auf die gleiche Range-Position. Bei der Umrechnung wird ein jeweiliger zweiter Abtastwert für die gleiche Range-Position aus den ersten Abtastwerten für die gleiche Range-Position in einer Empfangssequenz von mehreren Radarechos, welche aufeinander folgend in der Empfangseinrichtung empfangen werden, derart ermittelt, dass die Antennendiagramme aller Empfangskanäle für alle Radarechos der Empfangssequenz basierend auf einem oder mehreren Optimierungszielen gewichtet und kombiniert (d.h. summiert) werden, wobei das oder eines der Optimierungsziele ein vorbestimmter gleichmäßiger örtlicher Abstand zwischen den Phasenzentren der zweiten Abtastwerte ist. Die Empfangssequenz, aus der ein jeweiliger Abtastwert ermittelt wird, ist spezifisch für den entsprechenden Abtastwert. Dabei können aber auch für mehrere Abtastwerte immer die gleichen Empfangssequenzen genutzt werden.

Die mit dem erfindungsgemäßen Verfahren erhaltenen zweiten Abtastungen können anschließend mit an sich bekannten Methoden weiterverarbeitet werden. In einer bevorzugten Variante werden die zweiten Abtastungen zunächst basierend auf einem Datenreduktionsverfahren vermindert, um hierdurch die Menge an SAR-Daten geeignet zu reduzieren.

Das erfindungsgemäße Verfahren beruht auf der Idee, dass eine digitale Strahlformung, welche herkömmlich immer für ein bestimmtes empfangenes Radarecho durchgeführt wird, auch auf mehrere Radarechos erweitert werden kann, welche zu unterschiedlichen Zeitpunkten empfangen werden. Es wird hierdurch eine synthetische Strahlformung sowohl über mehrere Empfangskanäle als auch über mehrere empfangene Radarechos hinweg geschaffen. In diesem Sinne kann das erfindungsgemäße Verfahren auch als eine Kombination aus einer herkömmlichen Strahlformung mit einem Interpolationsverfahren angesehen werden. Über ein geeignetes Optimierungsziel in der Form einer gleichmäßigen Abtastung in Azimut-Richtung kann dabei eine gewisse Gleichmäßigkeit der zweiten Abtastwerte gewährleistet werden, welche die Weiterverarbeitung der Daten im Frequenzbereich ermöglicht. Darüber hinaus wird durch die Verwendung einer variablen Pulswiederholrate die Ausbildung von blinden Bereichen unterdrückt und gleichzeitig durch die mehreren Aperturen in Azimut-Richtung eine hohe Auflösung gewährleistet. Das erfindungsgemäße Verfahren kombiniert somit die Vorteile einer variablen Pulswiederholrate mit den Vorteilen eines Multi-Apertur-SAR-Systems.

In einer besonders bevorzugten Ausführungsform des erfindungsgemäßen Verfahrens werden mehrere Radarechos, die aus unterschiedlichen Range-Positionen stammen, gleichzeitig über mehrere Empfangskeulen mit unterschiedlichen Elevationswinkeln empfangen. Hierdurch wird die Erfassung eines breiten Streifens auf der Erdoberfläche mit einem breiten Sendeantennendiagramm in Elevation ermöglicht. Durch die mehreren Empfangskeulen können unterschiedliche Radarechos in Elevation voneinander unterschieden werden. Alternativ können die Radarechos auch durch eine entsprechende Codierung der Sendepulse voneinander getrennt werden.

In einer weiteren, besonders bevorzugten Ausführungsform umfassen die Optimierungsziele neben dem Optimierungsziel des vorbestimmten gleichmäßigen Abstands zwischen den Phasenzentren der zweiten Abtastwerte das weitere Optimierungsziel eines großen Signal-zu-Rausch-Verhältnisses für die zweiten Abtastwerte. Auf diese Weise kann eine hohe Signalqualität für die zweiten Abtastwerte gewährleistet werden.

Das erfindungsgemäße Verfahren verwendet vorzugsweise eine kombinierte Sende- und Empfangseinrichtung mit einer Reflektorantenne mit einem Mehrkanal-Feed (d.h. Mehrkanal-Speisepunkt). Darüber hinaus ist die kombinierte Sende- und Empfangseinrichtung vorzugsweise derart ausgestaltet, dass die Phasenzentren der ersten Abtastungen aller Empfangskanäle für das gleiche empfangene Radarecho an der gleichen Azimut-Position liegen. Dies ist in der Regel für eine Reflektorantenne mit einem Mehrkanal-Feed der Fall. Nichtdestotrotz kann das erfindungsgemäße Verfahren auch für andere Antennensysteme, wie z.B. ein planares Antennenarray, zum Einsatz kommen.

In einer weiteren, besonders bevorzugten Ausführungsform des erfindungsgemäßen Verfahrens werden die Radarpulse in sich zyklisch wiederholenden Sendesequenzen ausgesendet, wobei die Sendezeitpunkte innerhalb einer Sendesequenz vorgegeben sind und die Zeitintervalle zwischen aufeinander folgenden Sendezeitpunkten innerhalb der Sendesequenz zumindest einmal und vorzugsweise von jedem Zeitintervall zum nächsten darauf folgenden Zeitintervall variieren. Die aufeinander folgend empfangenen Radarechos der Radarpulse jeweiliger Sendesequenzen stellen dabei jeweilige Empfangssequenzen zur Ermittlung von zweiten Abtastwerten dar. Auf diese Weise wird eine geeignete Kombination eines Sendebetriebs mit zyklisch variierender Pulswiederholrate mit einem Multi-Apertur-Radarsystem geschaffen.

In einer weiteren bevorzugten Ausführungsform des erfindungsgemäßen Verfahrens wird jeder zweite Abtastwert, dessen Phasenzentrum innerhalb der Zeitspanne einer Empfangssequenz liegt, dadurch erhalten, dass die Antennendiagramme aller Empfangskanäle für alle Radarechos in der Empfangssequenz basierend auf dem oder den Optimierungszielen gewichtet und kombiniert werden. Vorzugsweise entspricht dabei die Anzahl der zweiten Abtastwerte, deren Phasenzentrum innerhalb der Zeitspanne der Empfangssequenz liegt, dem Produkt aus der Anzahl an Empfangskanälen und der Anzahl an Radarechos in der Empfangssequenz. Hierdurch werden zweite Abtastwerte mit guter Signalqualität erhalten.

In einer speziellen Ausführungsform des erfindungsgemäßen Verfahrens besteht das Optimierungsziel des vorbestimmten gleichmäßigen Abstands zwischen den Phasenzentren der zweiten Abtastwerte darin, dass für einen jeweiligen zweiten Abtastwert Gewichte für die jeweiligen Antennendiagramme aller Empfangskanäle für alle Radarechos der Empfangssequenz derart bestimmt werden, dass die Summe der mit diesen Gewichten gewichteten Antennendiagramme aller Empfangskanäle für alle Radarechos in der Empfangssequenz dem folgenden, dem jeweiligen zweiten Abtastwert zugeordneten Zielantennendiagramm $G_{GOAL}(f_d, n)$ entspricht, wobei nach Bestimmung der Gewichte ein jeweiliger zweiter Abtastwert als Summe von mit diesen Gewichten gewichteten ersten Abtastwerten einer Empfangssequenz berechnet wird:

$$G_{GOAL}(f_d, n) = G_{common}(f_d) \cdot \exp(-j \cdot 2 \cdot \pi \cdot t_{out}[n] \cdot f_d),$$

$$t_{out}[n] = \frac{n-1}{N_{ch} \cdot \overline{PRF}} + \delta t$$

wobei gilt;

wobei $f_d$ die Dopplerfrequenz und somit eine Richtung vom Phasenzentrum des jeweiligen zweiten Abtastwerts zu einer Azimut-Position auf der Erdoberfläche darstellt;

wobei $n$ ein Index für die zweiten Abtastwerte ist, welche aus der Empfangssequenz ermittelt werden, wobei $1 \leq n \leq N_{ch} \cdot N$ gilt, wobei $N$ der Anzahl von Radarechos in der Empfangssequenz entspricht und wobei $N_{ch}$ der Anzahl an Empfangskanälen entspricht;

wobei $\overline{PRF}$ der Mittelwert der Zeitintervalle zwischen aufeinander folgend empfangenen Radarechos innerhalb der

Empfangssequenz ist;

wobei $\delta t$ ein vorgegebener Zeitversatz oder Null ist;

wobei $G_{common}(f_d)$ ein gleicher gemeinsamer Faktor für alle zweiten Abtastwerte ist, die aus der Empfangssequenz ermittelt werden, wobei der gemeinsame Faktor von charakteristischen Größen der Antennendiagramme für alle Empfangskanäle abhängt.

Es gibt verschiedene Möglichkeiten, wie der Faktor $G_{common}(f_d)$ festgelegt werden kann, um zweite Abtastungen guter Qualität zu erhalten. Entscheidend ist dabei, dass der Faktor immer von Charakteristika der ursprünglichen Antennendiagramme für alle Empfangskanäle abhängt, um eine realistische Festlegung zu erreichen. In einer besonders bevorzugten Ausführungsform enthalten alle Antennendiagramme eines jeweiligen Empfangskanals die gleiche gemeinsame Antennenfunktion, welche von den (unterschiedlichen) Phasenzentren der Antennendiagramme des jeweiligen Empfangskanals für die empfangenen Radarechos unabhängig ist, wobei der gemeinsame Faktor $G_{common}(f_d)$ in diesem Fall von den Antennenfunktionen aller Empfangskanäle abhängt und vorzugsweise der Mittelwert dieser Antennenfunktionen ist, was eine physikalisch sinnvolle Wahl ist.

Je nach Ausgestaltung des erfindungsgemäßen Verfahrens kann eine Empfangssequenz, aus der ein jeweiliger zweiter Abtastwert ermittelt wird, eine unterschiedliche Anzahl von Radarechos beinhalten. Vorzugsweise besteht die Empfangssequenz aus mindestens fünf Radarechos, insbesondere aus mindestens zehn Radarechos besonders bevorzugt aus mindestens 30 Radarechos, wie z.B. zwischen 30 und 50 Radarechos.

In einer weiteren, besonders bevorzugten Ausführungsform werden das oder die Optimierungsziele durch eine Kostenfunktion repräsentiert, welche das oder die Optimierungsziele basierend auf einem Kostenterm oder eine Summe von mehreren Kostentermen beschreibt.

Neben dem oben beschriebenen Verfahren betrifft die Erfindung eine Synthetik-Apertur-Radarvorrichtung mit einem Multi-Apertur-Radarsystem auf einer Plattform, die sich im Betrieb der Synthetik-Apertur-Radarvorrichtung in eine Azimut-Richtung über der Erdoberfläche bewegt. Das Multi-Apertur-Radarsystem umfasst eine kombinierte Sende- und Empfangseinrichtung, welche im Sendebetrieb eine Sendeeinrichtung ist, die Radarpulse aussendet, und welche im Empfangsbetrieb eine Empfangseinrichtung ist, die an der Erdoberfläche reflektierte Radarechos dieser Radarpulse über mehrere Empfangskanäle mit zugeordneten Empfängern empfängt, wobei die Empfänger der Empfangskanäle auf der Plattform in Azimut-Richtung versetzt zueinander angeordnet sind. Ferner ist einem jeweiligen Empfangskanal für jedes durch diesen empfangene Radarecho, welches aus der gleichen Range-Position in einer Range-Richtung stammt, ein Antennendiagramm mit einem Phasenzentrum an einer Azimut-Position in Azimut-Richtung zugeordnet. Die Range-Richtung verläuft entlang der Erdoberfläche senkrecht zur Azimut-Richtung.

Die Sendeeinrichtung und die Empfangseinrichtung sind in der erfindungsgemäßen Vorrichtung derart ausgestaltet, dass:

- durch die Sendeeinrichtung zu aufeinander folgenden Sendezeitpunkten Radarpulse ausgesendet werden, wobei die Zeitintervalle zwischen aufeinander folgenden Sendezeitpunkten zumindest manchmal variieren;
- die Radarechos der Radarpulse durch die Empfangseinrichtung über die jeweiligen Empfangskanäle empfangen werden, wodurch für die Radarechos, welche aus der gleichen Range-Position stammen, erste Abtastwerte für diese Range-Position erhalten werden, welche jeweils einem Empfangskanal für ein empfangenes Radarecho entsprechen, wobei ein jeweiliger erster Abtastwert dem Phasenzentrum des Antennendiagramms des entsprechenden Empfangskanals für das empfangene Radarecho zugeordnet ist.

Die erfindungsgemäße Synthetik-Apertur-Radarvorrichtung ist dazu eingerichtet, die ersten Abtastwerte für die gleiche Range-Position in zweite Abtastwerte für diese Range-Position umzurechnen, indem ein jeweiliger zweiter Abtastwert aus den ersten Abtastwerten in einer Empfangssequenz von mehreren Radarechos, welche aufeinander folgend in der Empfangseinrichtung empfangen werden, derart ermittelt wird, dass die Antennendiagramme aller Empfangskanäle für alle Radarechos der Empfangssequenz basierend auf einem oder mehreren Optimierungszielen gewichtet und kombiniert werden, wobei das oder eines der Optimierungsziele ein vorbestimmter gleichmäßiger örtlicher Abstand zwischen den Phasenzentren der zweiten Abtastwerte ist.

Die erfindungsgemäße Umrechnung der ersten Abtastwerte in jeweilige zweite Abtastwerte erfolgt somit mittels einer Rechnereinheit, die Bestandteil der Synthetik-Apertur-Radarvorrichtung ist. Die Rechnereinheit kann dabei eine Rechnereinheit auf der Plattform des Multi-Apertur-Radarsystems sein. Ebenso kann die Rechnereinheit eine Rechnereinheit in einer Bodenstation auf der Erdoberfläche sein, wobei die entsprechenden ersten Abtastwerte über Funk von der Plattform ausgesendet und in der Bodenstation empfangen werden.

Vorzugsweise ist die erfindungsgemäße Synthetik-Apertur-Radarvorrichtung zur Durchführung einer oder mehrerer bevorzugter Varianten des erfindungsgemäßen Verfahrens eingerichtet.

Die Erfindung betrifft ferner ein Verfahren zur rechnergestützten Umrechnung von ersten Abtastwerten in zweite Abtastwerte, wobei die ersten Abtastwerte mit einem Synthetik-Apertur-Radarverfahren gemäß dem Oberbegriff des Anspruchs 1 erzeugt wurden. Dieses Verfahren ermittelt die zweiten Abtastwerte basierend auf den Merkmalen des kennzeichnenden Teils des Anspruchs 1.

Bevorzugte Varianten des obigen Umrechnungsverfahrens können die Umrechnung basierend auf einer oder mehreren der oben beschriebenen bevorzugten Ausführungsformen des erfindungsgemäßen Synthetik-Apertur-Radarverfahrens durchführen, sofern die entsprechenden Ausführungsformen die Umrechnung der ersten Abtastwerte in die zweiten Abtastwerte betreffen (Ansprüche 3, 5, 6, 7, 8, 10).

Bevorzugte Varianten des obigen Umrechnungsverfahrens können ferner zur Umrechnung von ersten Abtastwerten eingerichtet sein, welche basierend auf einer oder mehreren der oben beschriebenen bevorzugten Ausführungsformen des erfindungsgemäßen Synthetik-Apertur-Radarverfahrens erzeugt wurden, sofern die entsprechenden Ausführungsformen die Erzeugung von ersten Abtastwerten betreffen (Ansprüche 2, 4, 5, 9).

Die Erfindung betrifft darüber hinaus eine Vorrichtung zur rechnergestützten Umrechnung von ersten Abtastwerten in zweite Abtastwerte, wobei die ersten Abtastwerte mit einem Synthetik-Apertur-Radarverfahren gemäß dem Oberbegriff des Anspruchs 1 erzeugt wurden. Diese Vorrichtung ist zur Durchführung des erfindungsgemäßen Umrechnungsverfahrens bzw. bevorzugter Ausführungsformen dieses Umrechnungsverfahrens eingerichtet.

Ein Ausführungsbeispiel der Erfindung wird nachfolgend anhand der beigefügten Figuren detailliert beschrieben.

Es zeigen:

Fig. 1    eine seitliche Ansicht eines Multi-Apertur-Radarsystems, in dem eine Variante des erfindungsgemäßen Verfahrens implementiert werden kann;

Fig. 2    ein Diagramm, anhand dessen eine Ausführungsform des erfindungsgemäßen Verfahrens erläutert wird;

Fig. 3    eine schematische Darstellung der Kombination von Gewichten zur Ermittlung von gleichmäßigen Abtastwerten gemäß einer Ausführungsform des erfindungsgemäßen Verfahrens; und

Fig. 4    ein Diagramm, welches eine Implementierung einer Variante des erfindungsgemäßen Verfahrens mit einer idealen Referenz vergleicht.

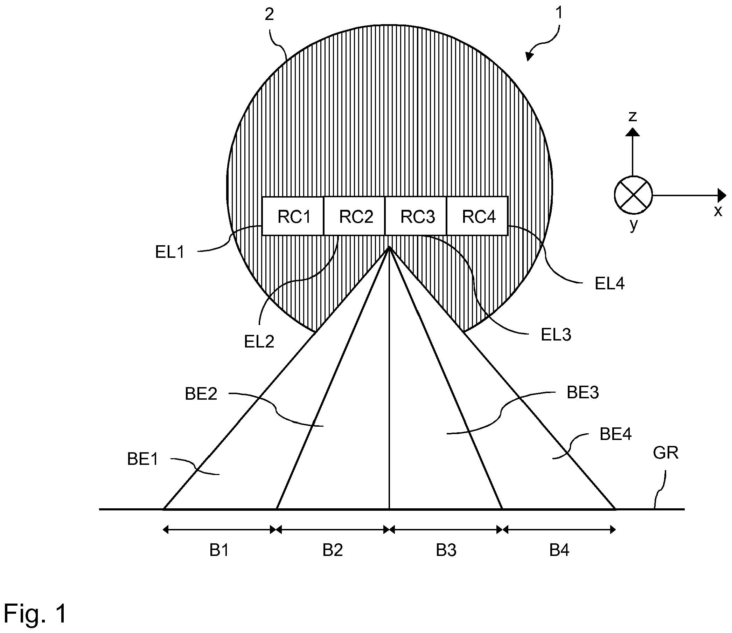

Das erfindungsgemäße Verfahren kommt in einem Multi-Apertur-Radarsystem zum Einsatz. Ein Beispiel eines solchen Radarsystems ist schematisch in Fig. 1 gezeigt.

Das Radarsystem der Fig. 1 befindet sich auf einer (nicht gezeigten) Plattform eines Satelliten, der sich in der sog. Azimut-Richtung x oberhalb der Erdoberfläche GR bewegt. Die Azimut-Richtung x entspricht somit der Flugrichtung des Satelliten. Demgegenüber stellt die senkrecht zur Blattebene verlaufende Richtung die sog. Range-Richtung y dar und die Richtung senkrecht zur Erdoberfläche ist die Höhe z. Der Winkel in der y-z-Ebene stellt die sog. Elevation dar.

Das Radarsystem der Fig. 1 umfasst eine kombinierte Sende- und Empfangseinrichtung 1 mit einem schraffiert dargestellten Reflektor 2, dessen Antennen-Feed im gezeigten Ausführungsbeispiel vier Antennenelemente EL1, EL2, EL3 und EL4 umfasst. Im Sendebetrieb des Radarsystems werden durch die Antennenelemente Radarpulse ausgesendet, wobei die an der Erdoberfläche reflektierten Radarechos der Radarpulse im Empfangsbetrieb des Radarsystems über die Antennenelemente EL1 bis EL4 empfangen werden. Die Strahlen der einzelnen Antennenelemente, über welche das Aussenden der Radarpulse und der Empfang der Radarechos erfolgt, sind in Fig. 1 mit BE1, BE2, BE3 und BE4 bezeichnet. Diese Strahlen sind sog. Sekundärstrahlen, welche aus zugeordneten Primärstrahlen der einzelnen Antennenelemente EL1 bis EL4 durch Reflexion am Reflektor 2 hervorgehen. Der Stahl BE1 ist dabei dem Antennenelement EL1, der Strahl BE2 dem Antennenelement EL2, der Strahl BE3 dem Antennenelement EL3 und der Strahl BE4 dem Antennenelement EL4 zugeordnet.

Wie aus Fig. 1 ersichtlich, beleuchtet jeder der Strahlen BE1 bis BE4 jeweilige Bereiche B1 bis B4 auf der Erdoberfläche, wobei diese Bereiche in Azimut-Richtung nebeneinander liegen. Gegebenenfalls können die Bereiche auch teilweise miteinander überlappen. Es werden somit durch das Radarsystem vier Aperturen in Azimut-Richtung gebildet. Im Empfangsbetrieb repräsentieren die einzelnen Antennenelemente EL1 bis EL4 Empfangskanäle RC1, RC2, RC3 bzw. RC4, welche die entsprechenden Radarechos aus den unterschiedlichen Bereichen B1 bis B4 erfassen. In der Ausführungsform der Fig. 1 umfassen die Antennenelemente ferner mehrere Subelemente in Elevation, so dass mehrere (nicht dargestellte) Empfangskeulen zur Ausleuchtung von in Range-Richtung benachbart zueinander liegenden Bereichen der Erdoberfläche gebildet werden. Alle Empfangskeulen für ein jeweiliges Antennenelement EL1 bis EL4 bilden insgesamt den entsprechenden Strahl BE1, BE2, BE3 bzw. BE4.

Wird das Radarsystem der Fig. 1 mit Sendepulsen mit konstantem Pulswiederholintervall betrieben, so besteht das Problem, dass sich an vorbestimmten Range-Positionen sog. blinde Streifen ausbilden, welche sich durch blockierte Radarechos ergeben, welche von der Sende- und Empfangseinrichtung nicht empfangen werden können, da zum Zeitpunkt der Ankunft des entsprechenden Radarechos die Sende- und Empfangseinrichtung gerade einen Radarpuls aussendet. Um solche durchgängigen blinden Bereiche zu vermeiden, wird das Radarsystem der Fig. 1 mit einem variablen Pulswiederholintervall betrieben. Dabei werden die Pulswiederholintervalle zyklisch in aufeinander folgenden Sendesequenzen aus mehreren Radarpulsen variiert. Eine Sequenz kann z.B. fünf Radarpulse oder auch mehr umfassen. Die Variation der Radarpulse in der entsprechenden Sequenz erfolgt nach einem vorgegebenen Schema, z.B. können die Zeitintervalle zwischen aufeinander folgend ausgesendeten Radarpulsen innerhalb einer Sequenz schrittweise immer kleiner werden. In einer Variante kann dabei ein Zeitwert vorgegeben sein, um den die Zeitspanne zwischen aufeinander folgenden Radarpulsen von einem Puls zum nächsten immer kleiner wird.

Bei der Verwendung von variierenden Pulswiederholintervallen besteht das Problem, dass sich hierdurch keine gleichmäßigen Abtastungen in Azimut-Richtung ergeben, was jedoch für die weitere Verarbeitung der SAR-Daten essentiell ist. Bei der Verwendung von ungleichmäßigen Pulswiederholintervallen für Einzel-Apertur-Radarsysteme wurde dieses Problem durch geeignete Interpolationstechniken gelöst. Bis dato gab es für Multi-Apertur-Systeme keine geeigneten Verfahren, um die ungleichmäßigen Abtastungen in gleichmäßige Abtastungen zu wandeln. Die Erfindung stellt erstmalig eine solche Methodik bereit, wobei eine Ausführungsform dieser Methodik nachfolgend im Detail erläutert wird.

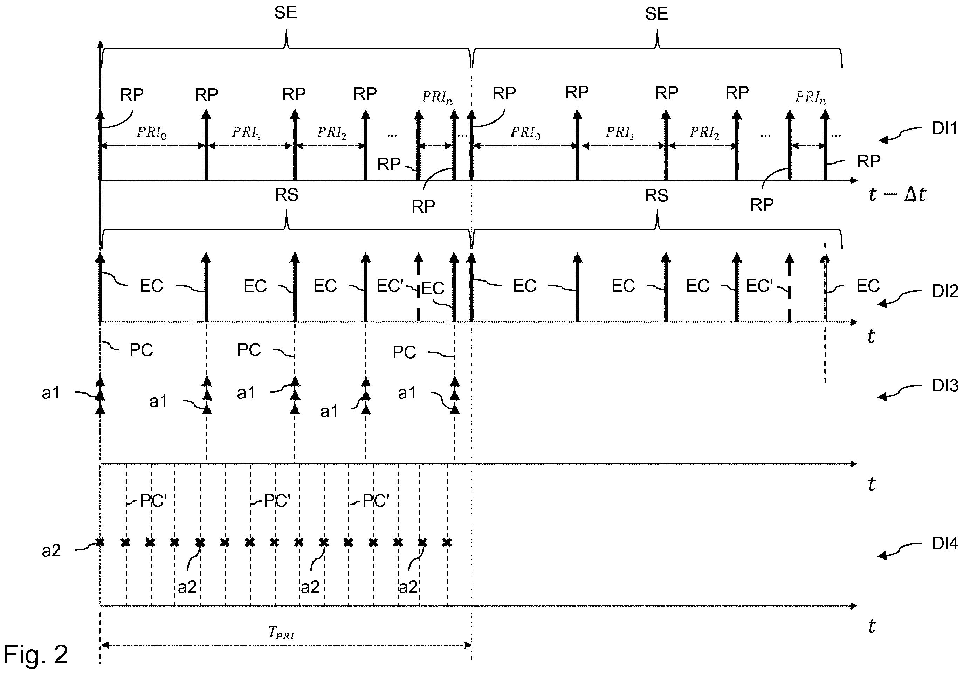

Fig. 2 zeigt vier Diagramme DI1 bis DI4, anhand derer das Prinzip des erfindungsgemäßen Verfahrens erläutert wird. In den einzelnen Diagrammen ist entlang der Abszisse die Zeit t aufgetragen, wobei zwischen dem Diagramm DI1 und den anderen Diagrammen DI2 bis DI4 ein Zeitversatz von $\Delta t$ besteht. Das Diagramm DI1 zeigt eine Folge von Radarpulsen RP mit variablen Sendezeitintervallen zwischen den Pulsen, wie sie in dem Multi-Apertur-Radarsystem der Fig. 1 implementiert sein kann. Die Radarpulse sind durch vertikal verlaufende Pfeile angedeutet und werden zyklisch innerhalb von Sendesequenzen SE variiert, wobei eine jeweilige Sendesequenz eine vorbestimmte Anzahl an Sendepulsen umfasst und innerhalb der Sequenz die Zeitabstände zwischen den Pulsen immer kleiner werden. Beispielhaft sind unterschiedliche Zeitabstände zwischen den Pulsen mit $PRI_0$, $PRI_1$, $PRI_2$ und $PRI_n$ bezeichnet. Eine Sendesequenz SE hat dabei eine Zeitdauer von $T_{PRI}$.

Im Unterschied zum Diagramm DI1 zeigt das Diagramm DI2 den Empfang der einzelnen Radarechos EC der entsprechenden Radarpulse RP mit dem Zeitversatz $\Delta t$, der einer bestimmten Entfernung bzw. Range-Position entspricht. Die Radarechos sind wiederum über vertikal verlaufende Pfeile angedeutet. Die einzelnen Radarechos werden über mehrere Empfangskanäle empfangen, wobei in dem Ausführungsbeispiel der Fig. 2 drei Empfangskanäle in Azimut-Richtung vorgesehen sind. Es ist somit ein Empfangskanal weniger als in dem Radarsystem der Fig. 1 vorhanden. Ansonsten ist der Aufbau des Radarsystems jedoch identisch zu Fig. 1. In Analogie zu den Sendesequenzen SE ergeben sich korrespondierende Empfangssequenzen RS mit unregelmäßigen Zeitintervallen zwischen den Radarechos, die im Empfangsbetrieb der kombinierten Sende- und Empfangseinrichtung empfangen werden. Innerhalb jeder Empfangssequenz RS gibt es im dargestellten Szenario ein Radarecho EC', welches durch einen gestrichelten Pfeil angedeutet ist. Dieses Radarecho kommt zwar in der Sende- und Empfangseinrichtung an, wird durch diese jedoch nicht detektiert, da zu diesem Zeitpunkt gerade ein neuer Radarpuls ausgesendet wird. Es handelt sich somit um ein blockiertes Radarecho EC', das bei der weiteren Datenverarbeitung nicht berücksichtigt werden kann und in diesem Sinne kein empfangenes Radarecho darstellt.

Für die Empfangszeitpunkte der entsprechenden Radarechos ergeben sich gemäß dem Diagramm DI3 immer drei übereinander liegende Abtastungen a1, die durch Dreiecke angedeutet sind. Die in dem Diagramm DI3 dargestellten Abtastungen treten für jede erfasste Range-Position in Range-Richtung auf. Die dargestellten Abtastungen a1 entsprechen somit Radarechos, die von der gleichen Range-Position stammen. Aus Übersichtlichkeitsgründen ist dabei nur ein Teil der Abtastungen mit dem Bezugszeichen versehen. Die übereinander liegenden Abtastungen a1 eines jeweiligen Radarechos haben das gleiche Phasenzentrum PC, das über vertikal verlaufende Linien repräsentiert wird und mit den zugeordneten Empfangszeitpunkten korrespondiert. Aus Übersichtlichkeitsgründen sind nur einige der vertikalen Linien mit dem Bezugszeichen PC versehen. Insgesamt werden innerhalb einer Empfangssequenz RS 15 Abtastwerte a1 erhalten, wobei für jedes Radarecho drei Abtastwerte für die drei Empfangskanäle existieren. Die Phasenzentren der Gruppen von drei Abtastungen weisen einen ungleichmäßigen örtlichen Abstand zueinander auf.

Im Rahmen der hier beschriebenen Ausführungsform werden die Abtastwerte a1, die im Folgenden auch als erste Abtastwerte bezeichnet sind, in zweite Abtastwerte a2 umgerechnet, deren Phasenzentren innerhalb der Empfangssequenz einen konstanten örtlichen Abstand aufweisen. Dies ist in dem Diagramm DI4 angedeutet. Die zweiten Abtastwerte, welche aus Übersichtlichkeitsgründen nur teilweise mit dem Bezugszeichen a2 versehen sind, sind durch Kreuze angedeutet. Die Phasenzentren der einzelnen zweiten Abtastwerte werden wiederum durch vertikal verlaufende Linien repräsentiert und sind mit Bezugszeichen PC' bezeichnet. Aus Übersichtlichkeitsgründen sind nicht alle vertikalen Linien mit dem Bezugszeichen PC' versehen. Da die zweiten Abtastwerte a2 einen gleichmäßigen Abstand aufweisen, können sie anschließend mit an sich bekannten Verfahren geeignet weiterverarbeitet werden, was bei ungleichmäßigen Abtastungen nicht der Fall ist.

Im Folgenden wird erläutert, wie die zweiten Abtastwerte a2 der Fig. 2 aus den ersten Abtastwerte für die entsprechende Range-Position ermittelt werden. Bei der Bestimmung der zweiten Abtastwerte macht man sich die erfindungswesentliche Idee zunutze, dass eine digitale Strahlformung nicht nur für ein einzelnes empfangenes Radarecho, sondern auch über alle Radarechos innerhalb einer Empfangssequenz hinweg durchgeführt werden kann. Den Ausgangspunkt bilden dabei die bekannten Antennendiagramme der jeweiligen Empfangskanäle zu entsprechenden Empfangszeitpunkten und für eine jeweilige Range-Position. Jedes Antennendiagramm gehört somit zu einem ersten Abtastwert, der einem Empfangskanal und einem Empfangszeitpunkt (d.h. einem empfangenen Radarecho) zugeordnet ist. Die Antennendiagramme lauten wie folgt:

$$G_k(f_d, i, k) = G_k(f_d) \cdot \exp(-j \cdot 2 \cdot \pi \cdot t_{RX}[i] \cdot f_d).$$

Dabei bezeichnet $k$ den jeweiligen Empfangskanal ($k = 1, ..., N_{ch}$) und $G_k(f_d)$ die Form des Antennendiagramms, die für den entsprechenden Empfangskanal und die entsprechende Range-Position immer gleich ist. Die Form des Antennendiagramms hängt dabei von der Dopplerfrequenz $f_d$ ab, die wiederum von der Position in Azimut-Richtung des durch das Antennendiagramm beleuchteten Bereichs für die entsprechende Range-Position auf der Erdoberfläche relativ zum Phasenzentrum des Antennendiagramms abhängt. In dem Beispiel der Fig. 1 ist dies die Position innerhalb der jeweiligen Bereiche B1 bis B4. Der zweite Term des obigen Antennendiagramms modelliert die Empfangszeitpunkte der unterschiedlichen Radarechos und hierdurch die unterschiedlichen Phasenzentren der jeweiligen Antennendiagramme. Der Term $t_{RX}[i]$, $1 \leq i \leq N$ bezeichnet demzufolge die Empfangszeitpunkte der entsprechenden Radarechos innerhalb einer Empfangssequenz RS, wobei $N$ die Anzahl der im Empfangsbetrieb empfangenen Radarechos (ohne blockierte Echos) innerhalb einer Empfangssequenz darstellt.

Um die gleichmäßigen Abtastwerte a2 zu erhalten, werden die Sollwerte von gleichmäßig beabstandeten Zeitpunkten und damit Phasenzentren gemäß dem Zielraster aus dem Diagramm DI4 festgelegt. Diese Sollzeitpunkte lauten allgemein für eine vorgegebene Anzahl $N_{ch}$ von Kanälen und die Anzahl $N$ von Radarechos in einer Empfangssequenz wie folgt:

$$t_{out}[n] = \frac{n-1}{N_{ch} \cdot \overline{PRF}} + \delta t, \quad 1 \leq n \leq N \cdot N_{ch}.$$

Dabei bezeichnet $\delta t$ eine beliebige Verschiebung des Zielrasters. Insbesondere kann $\delta t$ auch den Wert 0 aufweisen. $\overline{PRF}$ ist der Mittelwert über die ungleichmäßigen Zeitintervalle zwischen aufeinander folgend empfangenen Radarpulsen einer Empfangssequenz RS. Es existiert somit insgesamt eine Anzahl von Abtastwerten a2, die dem Produkt der Anzahl von Kanälen und der Anzahl von empfangenen Radarechos in einer Empfangssequenz entspricht. Die Abtastwerte sind dabei über den Buchstaben $n$ indiziert.

Für eine bestimmte Abtastung $n$ (d.h. einen bestimmten zweiten Abtastwert) in dem zu bestimmenden Zielraster entsprechend dem Diagramm DI4 der Fig. 2 ist dann folgendes Zielantennendiagramm einzustellen:

$$G_{GOAL}(f_d, n) = G_{common}(f_d) \cdot \exp(-j \cdot 2 \cdot \pi \cdot t_{out}[n] \cdot f_d).$$

Dabei bezeichnet $G_{common}(f_d)$ ein gemeinsames Antennendiagramm für alle zweiten Abtastwerte einer Empfangssequenz, wobei dieses Antennendiagramm wiederum von der Dopplerfrequenz $f_d$ und damit von der Relativposition zum Phasenzentrum in Azimut-Richtung auf der Erdoberfläche abhängt. Das Antennendiagramm muss dabei in geeigneter Weise Charakteristika der ursprünglichen Funktionen $G_k(f_d)$ der Antennendiagramme widerspiegeln. In einer bevorzugten Ausführungsform ist die Funktion $G_{common}(f_d)$ der Mittelwert der Antennendiagramme $G_k(f_d)$ über alle Empfangskanäle, was physikalisch einer Beleuchtung des mittleren Bereichs des Reflektors 2 aus Fig. 1 entspricht. Es hat sich jedoch gezeigt, dass sich sinnvolle Ergebnisse auch durch eine andere Wahl der Funktion $G_{common}(f_d)$ ergeben können, so dass dieser Parameter einen Freiheitsgrad darstellt. Insbesondere kann $G_{common}(f_d)$ auch iterativ über eine wiederholte Berechnung der weiter unten beschriebenen komplexen Gewichte $W_1, W_2, ..., W_M$ ($M = N \cdot N_{ch}$) bestimmt werden. Diese iterative Bestimmung wird weiter unten näher erläutert.

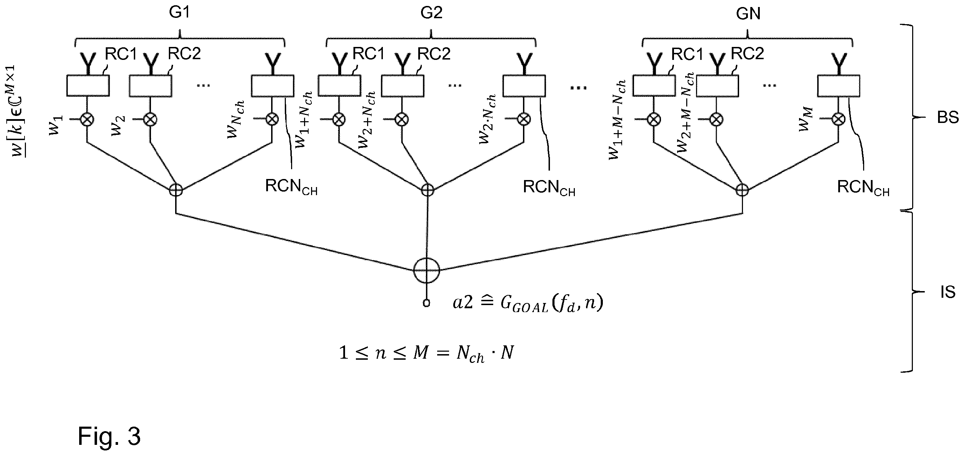

Um das obige Zieldiagramm $G_{GOAL}(f_d, n)$ zu bestimmen, müssen die ursprünglichen Antennendiagramme $G_k(f_d, i, k)$ geeignet mit komplexen Gewichten versehen und summiert werden. Entsprechende komplexe Gewichte werden dabei für jeden zweiten Abtastwert ermittelt. Die Ermittlung der komplexen Gewichte erfolgt basierend auf einem Optimierungsverfahren mit dem Optimierungsziel, dass das Antennendiagramm, welches sich aus der Summation der mit den komplexen Gewichten gewichteten Antennendiagramme $G_k(f_d, i, k)$ ergibt, möglichst gut mit dem Antennendiagramm $G_{GOAL}(f_d, n)$ übereinstimmt. Dieses Optimierungsziel kann durch eine möglichst geringe quadratische Abweichung zwischen diesen Antennendiagrammen repräsentiert werden. Nach der Lösung des Optimierungsproblems werden die jeweiligen ersten Abtastungen mit den entsprechenden, ihnen zugeordneten Gewichten (d.h. den Gewichten der ihnen zugeordneten Antennendiagramme) multipliziert und die gewichteten Abtastungen summiert, woraus sich dann ein jeweiliger zweiter Abtastwert ergibt. Dieses Vorgehen ist nochmals in Fig. 3 veranschaulicht.

Wie bereits oben angedeutet, werden zur Ermittlung eines jeweiligen zweiten Abtastwerts komplexe Gewichte $W_1$, $W_2$, ..., $W_M$ (M = $N \cdot N_{ch}$) für jeden ersten Abtastwert und damit für jeden Kanal und jedes Radarecho bestimmt. Die einzelnen Kanäle RC1, RC2, ..., RC$N_{ch}$ sind in Fig. 3 durch Antennenelemente angedeutet, wobei die Antennenelemente für jedes Radarecho eine entsprechende Gruppe G1, G2, ..., GN bilden. Jedes der Antennenelemente (d.h. jeder erste Abtastwert) wird mit dem entsprechenden Gewicht multipliziert, und anschließend werden alle ersten Abtastwerte summiert, wie im unteren Teil der Fig. 1 angedeutet ist. Zur Hervorhebung des Wesens der Erfindung wurde die Summation in eine Strahlformungs-Ebene BS und eine Interpolations-Ebene IS aufgeteilt. Hierdurch kommt zum Ausdruck, dass die Erfindung die Kombination einer Strahlformung mit einer Interpolation darstellt. Die Strahlformung erfolgt für jedes Radarecho über die Summation der Empfangskanäle, wohingegen bei der Interpolation die Summation über die Radarechos hinweg erfolgt. Die Strahlformungs-Ebene BS und die Interpolations-Ebene IS sind nur zur Veranschaulichung wiedergegeben, um hervorzuheben, dass sowohl Informationen von verschiedenen Kanälen (Beamforming) als auch von verschiedenen Radarechos (Interpolation) benutzt werden, um einen jeweiligen zweiten Abtastwert zu generieren. Bei der tatsächlichen Summation werden die einzelnen gewichteten ersten Abtastwerte nacheinander summiert, ohne dass die in Fig. 3 angedeuteten Zwischensummen für jeweilige Gruppen von Kanälen gebildet werden.

Das oben beschriebene Optimierungsziel einer guten Übereinstimmung der gewichteten Summe der Antennendiagramme mit dem Zielantennendiagramm $G_{GOAL}(f_d, n)$ wird in der hier beschriebenen Variante der Erfindung basierend auf der Minimierung einer Kostenfunktion realisiert, wobei die Kostenfunktion von der quadratischen Differenz zwischen der Summe der gewichteten Antennendiagramme und dem Zielantennendiagramm abhängt. Mit anderen Worten wird der Unterschied zwischen dem Zielraster und dem letztendlich implementierten Raster in der Kostenfunktion berücksichtigt. In Modifikationen des soeben beschriebenen Verfahrens können neben dem Optimierungsziel der guten Übereinstimmung des Zielrasters mit dem implementierten Raster auch noch weitere Optimierungsziele einfließen, die als separate Terme in der Kostenfunktion berücksichtigt werden. Mit anderen Worten besteht die Kostenfunktion dann aus einer Summe von mehreren Termen, welche jeweils ein Optimierungsziel berücksichtigen, wobei die Terme gegebenenfalls über geeignete Faktoren gewichtet sein können. In einer besonders bevorzugten Ausführungsform fließt als weiteres Optimierungsziel ein möglichst hohes Signal-Rausch-Verhältnis des Zielrasters in die Kostenfunktion ein.

Im Folgenden wird erläutert, wie die Funktion $G_{common}(f_d)$ über eine Iteration bestimmt werden kann. Ausgangspunkt der Iteration, deren Schritte nachfolgend durch den Index $p$ indiziert werden, ist die Darstellung von $G_{common}^{0}(f_d)$ als Mittelwert der Antennendiagramme $G_k(f_d)$ über alle Empfangskanäle, d.h. es gilt:

$$G_{common}^{0}(f_d) = \frac{1}{N_{ch}} \cdot \sum_{k=1}^{N_{ch}} G_k(f_d),$$

In jedem Iterationsschritt werden dann die komplexen Gewichte $w(i, k, p)$ mittels der oben dargelegten Optimierung bestimmt. Die Gewichte $w(i, k, p)$ entsprechen den obigen Gewichten $W_1$, $W_2$, ..., $W_M$ (M = $N \cdot N_{ch}$), sie enthalten jedoch den zusätzlichen Index $p$ zur Spezifikation des Iterationsschritts. Von Iterationsschritt $p$ zu Iterationsschritt p+1 wir dann die Funktion $G_{common}(f_d)$ wie folgt aktualisiert:

$$G_{common}^{p+1}(f_d) = \frac{1}{N \cdot N_{ch}} \cdot \sum_{n=1}^{N \cdot N_{ch}} \hat{G}_{GOAL}(f_d, n, p) \cdot \exp(+j \cdot 2 \cdot \pi \cdot t_{out}[n] \cdot f_d),$$

wobei

$$\hat{G}_{GOAL}(f_d, n, p) = \sum_{i=1}^{N} \sum_{k=1}^{N_{ch}} G_k(f_d, i, k) \cdot w(i, k, p)$$

Mit der neuen Funktion $G_{common}^{p+1}(f_d)$ $(f_d)$ werden dann mittels der Optimierung neue komplexe Gewichte $w(i, k, p + 1)$ ermittelt, welche wiederum zur Bestimmung einer neuen Funktion $G_{common}^{p+2}(f_d)$ genutzt werden. Die Iteration wird beendet, wenn die Ergebnisse stabil werden, d.h. wenn die Gewichte im Wesentlichen unverändert bleiben.

Dies ist gleichbedeutend damit, dass die entsprechenden Gewichte von einem Iterationsschritt zum nächsten weniger als ein vorbestimmter Schwellwert voneinander abweichen. Basierend auf der obigen Iteration wird ein Mittelwert von $G_{common}(f_d)$ über die zweiten Abtastwerte in einem Iterationsschritt $p$ geschätzt und als Teil des Zielrasters im Iterationsschritt $p$+1 genutzt. Dadurch werden in $G_{common}^{p+1}(f_d)$ anders als in $G_{common}^{0}(f_d)$ Informationen über andere zweite Abtastwerte mit Phasenzentren innerhalb der Empfangssequenz zur Berechnung der Gewichte verwendet.

Eine Implementierung des erfindungsgemäßen Verfahrens wurde anhand von simulierten (ersten) Abtastungen eines Multi-Apertur-Radarsystems getestet. Es wurden dabei Abtastungen mit sich wiederholenden Empfangssequenzen aus 31 Radarechos betrachtet, wobei innerhalb einer Empfangssequenz die Pulswiederholrate kontinuierlich abnimmt. Die Radarechos wurden über drei Empfangskanäle eines Multi-Apertur-Reflektorsystems erfasst.

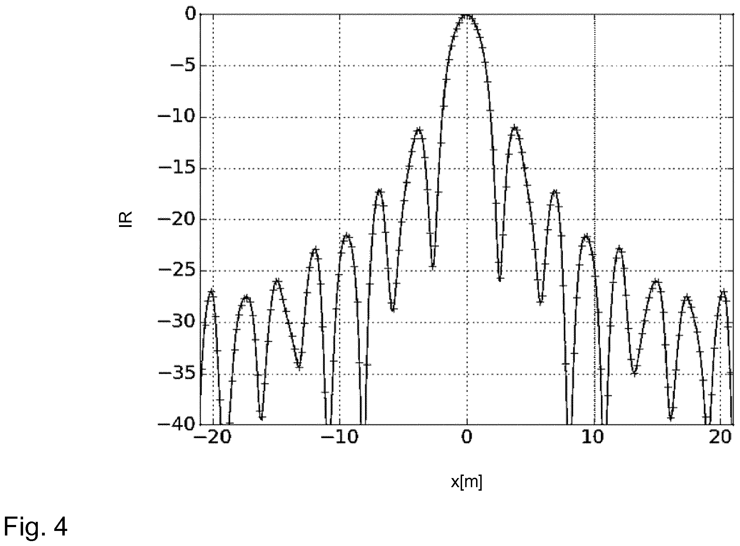

Die sich durch das erfindungsgemäße Verfahren ergebenden zweiten Abtastungen wurden dann mit einem idealen Referenzsystem verglichen, bei dem die einzelnen Abtastungen mit einem Einzel-Apertur-Radarsystem mit konstanter Pulswiederholrate erfasst werden. Unter anderem wurde dabei die Impulsantwort beider Systeme verglichen, wie in dem Diagramm der Fig. 4 angedeutet ist. Dort ist entlang der Abszisse die Azimut-Position x und entlang der Ordinate die Größe der Impulsantwort IR angedeutet. Die durchgezogenen Linien zeigen die Impulsantwort für ein in Azimut-Richtung fokussiertes Signal für das ideale Referenzsystem, wohingegen die Kreuze die Impulsantwort für das in Azimut-Richtung fokussierte Signal der erfindungsgemäß ermittelten Abtastungen darstellt. Wie man erkennt, stimmen die Impulsantworten in dem dargestellten Azimut-Intervall sehr gut überein. Das erfindungsgemäße Verfahren liefert somit für ein Multi-Apertur-Radarsystem qualitativ sehr gute Daten mit gleichmäßigen Abtastungen.

Die im Vorangegangenen beschriebenen Ausführungsformen der Erfindung weisen eine Reihe von Vorteilen auf. Insbesondere wird erstmalig eine Methodik geschaffen, mit der für ein Multi-Apertur-Radarsystem mit variablem Pulswiederholintervall ein Raster aus gleichmäßigen Abtastungen erhalten werden kann. Man macht sich hierbei die Idee zunutze, dass Informationen von Abtastwerten aus unterschiedlichen Radarechos für eine digitale Strahlformung genutzt werden können. Mit anderen Worten wird eine synthetische digitale Strahlformung über mehrere Radarechos hinweg durchgeführt, um hierdurch gleichmäßige Abtastungen zu generieren, die dann bei der Datenauswertung der SAR-Daten mit bekannten Verfahren geeignet weiterverarbeitet werden können.

## Patentansprüche

1.  Synthetik-Apertur-Radarverfahren zur Fernerkundung der Erdoberfläche (GR) über ein Multi-Apertur-Radarsystem auf einer Plattform, die sich in eine Azimut-Richtung (x) über der Erdoberfläche (GR) bewegt, wobei das Multi-Apertur-Radarsystem eine kombinierte Sende- und Empfangseinrichtung (1) umfasst, welche im Sendebetrieb eine Sendeeinrichtung ist, die Radarpulse (RP) aussendet, und welche im Empfangsbetrieb eine Empfangseinrichtung ist, die an der Erdoberfläche (GR) reflektierte Radarechos (EC) dieser Radarpulse (RP) über mehrere Empfangskanäle (RC1, RC2, RC3, RC4) mit zugeordneten Empfängern empfängt, wobei die Empfänger der Empfangskanäle (RC1, RC2, RC3, RC4) auf der Plattform in Azimut-Richtung (x) versetzt zueinander angeordnet sind, wobei einem jeweiligen Empfangskanal (RC1, RC2, RC3, RC4) für jedes durch diesen empfangene Radarecho (EC), welches aus der gleichen Range-Position in einer Range-Richtung (y) stammt, ein Antennendiagramm mit einem Phasenzentrum (PC) an einer Azimut-Position (x) in Azimut-Richtung zugeordnet ist, wobei die Range-Richtung (y) entlang der Erdoberfläche (GR) senkrecht zur Azimut-Richtung (x) verläuft, wobei:

    - durch die Sendeeinrichtung zu aufeinander folgenden Sendezeitpunkten Radarpulse (RP) ausgesendet werden, wobei die Zeitintervalle ($PRI_0$, $PRI_1$, $PRI_2$, $PRI_n$) zwischen aufeinander folgenden Sendezeitpunkten zumindest manchmal variieren;
    - die Radarechos der Radarpulse (RP) durch die Empfangseinrichtung über die jeweiligen Empfangskanäle (RC1, RC2, RC3, RC4) empfangen werden, wodurch für die Radarechos (EC), welche aus der gleichen Range-Position (y) stammen, erste Abtastwerte (a1) für diese Range-Position erhalten werden, welche jeweils einem Empfangskanal (RC1, RC2, RC3, RC4) für ein empfangenes Radarecho (EC) entsprechen, wobei ein jeweiliger erster Abtastwert (a1) dem Phasenzentrum (PC) des Antennendiagramms des entsprechenden Empfangskanals (RC1, RC2, RC3, RC4) für das empfangene Radarecho (EC) zugeordnet ist;

    **dadurch gekennzeichnet, dass**
    die ersten Abtastwerte (a1) für die gleiche Range-Position in zweite Abtastwerte für diese Range-Position umgerechnet werden, indem ein jeweiliger zweiter Abtastwert (a2) aus den ersten Abtastwerten (a1) in einer Empfangssequenz (RS) von mehreren Radarechos (EC), welche aufeinander folgend in der Empfangseinrichtung empfangen werden, derart ermittelt wird, dass die Antennendiagramme aller Empfangskanäle (RC1, RC2, RC3, RC4) für alle Radarechos (EC) der Empfangssequenz (RS) basierend auf einem oder mehreren Optimierungszielen gewichtet und kombiniert werden, wobei das oder eines der Optimierungsziele ein vorbestimmter gleichmäßiger örtlicher Abstand zwischen den Phasenzentren (PC') der zweiten Abtastwerte (a2) ist.

2. Verfahren nach Anspruch 1, **dadurch gekennzeichnet, dass** mehrere Radarechos (EC), die aus unterschiedlichen Range-Positionen stammen, gleichzeitig über mehrere Empfangskeulen mit unterschiedlichen Elevationswinkeln empfangen werden.

3. Verfahren nach Anspruch 1 oder 2, **dadurch gekennzeichnet, dass** die Optimierungsziele neben dem Optimierungsziel des vorbestimmten gleichmäßigen Abstands zwischen den Phasenzentren (PC') der zweiten Abtastwerte (a2) das weitere Optimierungsziel eines großen Signal-zu-Rausch-Verhältnisses für die zweiten Abtastwerte (a2) ist.

4. Verfahren nach einem der vorhergehenden Ansprüche, **dadurch gekennzeichnet, dass** die kombinierte Sende- und Empfangseinrichtung eine Reflektorantenne (1) mit einem Mehrkanal-Feed ist.

5. Verfahren nach einem der vorhergehenden Ansprüche, **dadurch gekennzeichnet, dass** die Radarpulse (RP) in sich zyklisch wiederholenden Sendesequenzen (SE) ausgesendet werden, wobei die Sendezeitpunkte innerhalb einer Sendesequenz (SE) vorgegeben sind und die Zeitintervalle ($PRI_0$, $PRI_1$, $PRI_2$, $PRI_n$) zwischen aufeinander folgenden Sendezeitpunkten innerhalb der Sendesequenz (SE) zumindest einmal variieren, wobei die aufeinander folgend empfangenen Radarechos (EC) der Radarpulse (RP) jeweiliger Sendesequenzen (SE) jeweilige Empfangssequenzen (RS) zur Ermittlung von zweiten Abtastwerten (a2) bilden.

6. Verfahren nach Anspruch 5, **dadurch gekennzeichnet, dass** jeder zweite Abtastwert (a2), dessen Phasenzentrum (PC) innerhalb der Zeitspanne einer Empfangssequenz (RS) liegt, dadurch erhalten wird, dass die Antennendiagramme aller Empfangskanäle (RC1, RC2, RC3, RC4) für alle Radarechos in der Empfangssequenz (RS) basierend auf dem oder den Optimierungszielen gewichtet und kombiniert werden, wobei die Anzahl der zweiten Abtastwerte (a2), deren Phasenzentrum innerhalb der Zeitspanne der Empfangssequenz (RS) liegt, vorzugsweise dem Produkt aus der Anzahl an Empfangskanälen (RC1, RC2, RC3, RC4) und der Anzahl an Radarechos (EC) in der Empfangssequenz (RS) entspricht.

7. Verfahren nach einem der vorhergehenden Ansprüche, **dadurch gekennzeichnet, dass** das Optimierungsziel des vorbestimmten gleichmäßigen Abstands zwischen den Phasenzentren (PC') der zweiten Abtastwerte (a2) darin besteht, dass für einen jeweiligen zweiten Abtastwert (a2) Gewichte ($W_1$, $W_2$, ..., $W_M$) für die jeweiligen Antennendiagramme aller Empfangskanäle (RC1, RC2, RC3, RC4) für alle Radarechos (EC) der Empfangssequenz (RS) derart bestimmt werden, dass die Summe der mit diesen Gewichten ($W_1$, $W_2$, ..., $W_M$) gewichteten Antennendiagramme aller Empfangskanäle (RC1, RC2, RC3, RC4) für alle Radarechos (EC) der Empfangssequenz (RS) dem folgenden, dem jeweiligen zweiten Abtastwert (a2) zugeordneten Zielantennendiagramm $G_{GOAL}$ ($f_d$, $n$) entspricht, wobei nach Bestimmung der Gewichte ein jeweiliger zweiter Abtastwert (a2) als Summe von mit diesen Gewichten ($W_1$, $W_2$, ..., $W_M$) gewichteten ersten Abtastwerten (a1) der Empfangssequenz (RS) berechnet wird:

$$G_{GOAL}(f_d, n) = G_{common}(f_d) \cdot \exp(-j \cdot 2 \cdot \pi \cdot t_{out}[n] \cdot f_d),$$

wobei $t_{out}[n] = \frac{n-1}{N_{ch} \cdot \overline{PRF}} + \delta t$ gilt;

wobei $f_d$ die Dopplerfrequenz und somit eine Richtung vom Phasenzentrum (PC') des jeweiligen zweiten Abtastwerts (a2) zu einer Azimut-Position auf der Erdoberfläche (GR) darstellt;

wobei $n$ ein Index für die zweiten Abtastwerte (a2) ist, welche aus der Empfangssequenz (RS) ermittelt werden, wobei $1 \leq n \leq N_{ch} \cdot N$ gilt, wobei $N$ der Anzahl von Radarechos in der Empfangssequenz (RS) entspricht und wobei $N_{ch}$ der Anzahl an Empfangskanälen (RC1, RC2, RC3, RC4) entspricht; wobei $\overline{PRF}$ der Mittelwert der Zeitintervalle ($PRI_0$, $PRI_1$, $PRI_2$, $PRI_n$) zwischen aufeinander folgend empfangenen Radarechos (EC) innerhalb der Empfangssequenz (RS) ist;

wobei $\delta t$ ein vorgegebener Zeitversatz oder Null ist;

wobei $G_{common}(f_d)$ ein gleicher gemeinsamer Faktor für alle zweiten Abtastwerte (a2) ist, die aus der Empfangssequenz (RS) ermittelt werden, wobei der gemeinsame Faktor von charakteristischen Größen der Antennendiagramme für alle Empfangskanäle (RC1, RC2, RC3, RC4) abhängt.

8. Verfahren nach Anspruch 7, **dadurch gekennzeichnet, dass** alle Antennendiagramme eines jeweiligen Empfangskanal (RC1, RC2, RC3, RC4) die gleiche Antennenfunktion ($G_k(f_d)$) enthalten, welche von den Phasenzentren (PC) der Antennendiagramme des jeweiligen Empfangskanals (RC1, RC2, RC3, RC4) für die empfangenen Radarechos (EC) unabhängig ist, wobei der gemeinsame Faktor $G_{common}(f_d)$ von den Antennenfunktionen aller Empfangskanäle (RC1, RC2, RC3, RC4) abhängt und vorzugsweise der Mittelwert der Antennenfunktionen aller Empfangskanäle (RC1, RC2, RC3, RC4) ist.

9.  Verfahren nach einem der vorhergehenden Ansprüche, **dadurch gekennzeichnet, dass** eine Empfangssequenz (RS) aus mindestens fünf Radarechos (EC), vorzugsweise aus mindestens zehn Radarechos (EC) und besonders bevorzugt aus mindestens 30 Radarechos, besteht.

10. Verfahren nach einem der vorhergehenden Ansprüche, **dadurch gekennzeichnet, dass** das oder die Optimierungsziele durch eine Kostenfunktion repräsentiert werden, welche das oder die Optimierungsziele basierend auf einem Kostenterm oder einer Summe von mehreren Kostentermen beschreibt.

11. Synthetik-Apertur-Radarvorrichtung zur Fernerkundung der Erdoberfläche (GR), umfassend ein Multi-Apertur-Radarsystem auf einer Plattform, die sich im Betrieb der Synthetik-Apertur-Radarvorrichtung in eine Azimut-Richtung (x) über der Erdoberfläche (GR) bewegt, wobei das Multi-Apertur-Radarsystem eine kombinierte Sende- und Empfangseinrichtung (1) umfasst, welche im Sendebetrieb eine Sendeeinrichtung ist, die Radarpulse (RP) aussendet, und welche im Empfangsbetrieb eine Empfangseinrichtung ist, die an der Erdoberfläche (GR) reflektierte Radarechos (EC) dieser Radarpulse (RP) über mehrere Empfangskanäle (RC1, RC2, RC3, RC4) mit zugeordneten Empfängern empfängt, wobei die Empfänger der Empfangskanäle (RC1, RC2, RC3, RC4) auf der Plattform in Azimut-Richtung (x) versetzt zueinander angeordnet sind, wobei einem jeweiligen Empfangskanal (RC1, RC2, RC3, RC4) für jedes durch diesen empfangene Radarecho (EC), welches aus der gleichen Range-Position in einer Range-Richtung (y) stammt, ein Antennendiagramm mit einem Phasenzentrum (PC) an einer Azimut-Position (x) in Azimut-Richtung zugeordnet ist, wobei die Range-Richtung (y) entlang der Erdoberfläche (GR) senkrecht zur Azimut-Richtung (x) verläuft, wobei die Sendeeinrichtung und die Empfangseinrichtung derart ausgestaltet sind, dass:

    - durch die Sendeeinrichtung zu aufeinander folgenden Sendezeitpunkten Radarpulse (RP) ausgesendet werden, wobei die Zeitintervalle ($PRI_0$, $PRI_1$, $PRI_2$, $PRI_n$) zwischen aufeinander folgenden Sendezeitpunkten zumindest manchmal variieren;
    - die Radarechos der Radarpulse (RP) durch die Empfangseinrichtung über die jeweiligen Empfangskanäle (RC1, RC2, RC3, RC4) empfangen werden, wodurch für die Radarechos (EC), welche aus der gleichen Range-Position (y) stammen, erste Abtastwerte (a1) für diese Range-Position erhalten werden, welche jeweils einem Empfangskanal (RC1, RC2, RC3, RC4) für ein empfangenes Radarecho (EC) entsprechen, wobei ein jeweiliger erster Abtastwert (a1) dem Phasenzentrum (PC) des Antennendiagramms des entsprechenden Empfangskanals (RC1, RC2, RC3, RC4) für das empfangene Radarecho (EC) zugeordnet ist;

    **dadurch gekennzeichnet, dass**
    die Synthetik-Apertur-Radar-Vorrichtung dazu eingerichtet ist, die ersten Abtastwerte (a1) für die gleiche Range-Position in zweite Abtastwerte für diese Range-Position umzurechnen, indem ein jeweiliger zweiter Abtastwert (a2) aus den ersten Abtastwerten (a1) in einer Empfangssequenz (RS) von mehreren Radarechos (EC), welche aufeinander folgend in der Empfangseinrichtung empfangen werden, derart ermittelt wird, dass die Antennendiagramme aller Empfangskanäle (RC1, RC2, RC3, RC4) für alle Radarechos (EC) der Empfangssequenz (RS) basierend auf einem oder mehreren Optimierungszielen gewichtet und kombiniert werden, wobei das oder eines der Optimierungsziele ein vorbestimmter gleichmäßiger örtlicher Abstand zwischen den Phasenzentren (PC') der zweiten Abtastwerte (a2) ist.

12. Synthetik-Apertur-Radarvorrichtung nach Anspruch 11, **dadurch gekennzeichnet, dass** die Synthetik-Apertur-Radarvorrichtung zur Durchführung eines Verfahrens nach einem der Ansprüche 2 bis 10 ausgestaltet ist.

13. Verfahren zur rechnergestützten Umrechnung von ersten Abtastwerten (a1) in zweite Abtastwerte (a2), wobei die ersten Abtastwerte (a1) mit einem Synthetik-Apertur-Radarverfahren gemäß dem Oberbegriff des Anspruchs 1 erzeugt wurden,
    **dadurch gekennzeichnet, dass**
    die ersten Abtastwerte (a1) für die gleiche Range-Position in zweite Abtastwerte für diese Range-Position umgerechnet werden, indem ein jeweiliger zweiter Abtastwert (a2) aus den ersten Abtastwerten (a1) in einer Empfangssequenz (RS) von mehreren Radarechos (EC), welche aufeinander folgend in der Empfangseinrichtung empfangen wurden, derart ermittelt wird, dass die Antennendiagramme aller Empfangskanäle (RC1, RC2, RC3, RC4) für alle Radarechos (EC) der Empfangssequenz (RS) basierend auf einem oder mehreren Optimierungszielen gewichtet und kombiniert werden, wobei das oder eines der Optimierungsziele ein vorbestimmter gleichmäßiger örtlicher Abstand zwischen den Phasenzentren (PC') der zweiten Abtastwerte (a2) ist.

**14.** Vorrichtung zur rechnergestützten Umrechnung von ersten Abtastwerten (a1) in zweite Abtastwerte (a2), wobei die ersten Abtastwerte (a1) mit einem Synthetik-Apertur-Radarverfahren gemäß dem Oberbegriff des Anspruchs 1 erzeugt wurden, **dadurch gekennzeichnet, dass** die Vorrichtung zur Durchführung eines Verfahrens nach Anspruch 13 eingerichtet ist.

## Claims

**1.** A synthetic aperture radar method for remote sensing of the Earth's surface (GR) via a multi-aperture radar system on a platform moving in an azimuthal direction (x) above the Earth's surface (GR), wherein the multi-aperture radar system includes a combined transmitting and receiving device (1), which is a transmitting device in the transmission mode, which emits radar pulses (RP), and which is a receiving device in the receiving mode, which receives radar echoes (EC) of these radar pulses (RP) reflected off the earth's surface (GR) by way of several receiving channels (RC1, RC2, RC3, RC4) with associated receivers, wherein the receivers of the receiving channels (RC1, RC2, RC3, RC4) are disposed on the platform, so that they are offset relative to each other in the azimuth direction (x), wherein an antenna diagram with a phase center (PC) at an azimuth position (x) in the azimuth direction is associated with a respective receiving channel (RC1, RC2, RC3, RC4) for each radar echo (EC) received through it, coming from the same range position in a range direction (y), wherein the range direction (y) runs along the surface of the earth (GR) perpendicularly to the azimuth direction (x), wherein:

- radar pulses (RP) are transmitted by the transmitting device at successive transmission times, wherein the time intervals ($PRI_0$, $PRI_1$, $PRI_2$, $PRI_n$) vary at least sometimes between successive transmission times;
- the radar echoes of the radar pulses (RP) are received by the receiving device via the respective receiving channels (RC1, RC2, RC3, RC4), whereby, for the radar echoes (EC) originating from the same range position (y), first samples (a1) are obtained for this range position, each corresponding to a receiving channel (RC1, RC2, RC3, RC4) for a received radar echo (EC), wherein a respective first sample (a1) is associated with the phase center (PC) of the antenna diagram of the corresponding receiving channel (RC1, RC2, RC3, RC4) for the received radar echo (EC);

**characterized in that**
the first samples (a1) for the same range position are converted into second samples for that range position, by determining a respective second sample (a2) from the first samples (a1) in a receive sequence (RS) of several radar echoes (EC) which are successively received in the receiving device, in such a manner that the antenna diagrams of all receiving channels (RC1, RC2, RC3, RC4) are weighted and combined for all radar echoes (EC) of the receive sequence (RS) based on one or several optimization targets, wherein the or one of the optimization targets is a predetermined uniform local distance between the phase centers (PC') of the second samples (a2).

**2.** The method according to claim 1, **characterized in that** a plurality of radar echoes (EC), which originate from different range positions, are received simultaneously via a plurality of receiving lobes with different elevation angles.

**3.** The method according to claim 1 or 2, **characterized in that**, in addition to the optimization target of a predetermined uniform distance between the phase centers (PC') of the second samples (a2), the optimization targets comprise the further optimization target of a high signal-to-noise ratio for the second samples (a2).

**4.** The method according to one of the afore-mentioned claims, **characterized in that** the combined transmitting and receiving device is a reflector antenna (1) with a multi-channel feed.

**5.** The method according to one of the preceding claims, **characterized in that** the radar pulses (RP) are transmitted in cyclically repeating transmission sequences (SE), wherein the transmission times are given within a transmission sequence (SE) and the time intervals ($PRI_0$, $PRI_1$, $PRI_2$, $PRI_n$) between consecutive transmission times within the transmission sequence (SE) vary at least once, wherein the successively received radar echoes (EC) of the radar pulses (RP) of respective transmission sequences (SE) form respective reception sequences (RS) for determining second samples (a2).

6. The method according to claim 5, **characterized in that** every second sample (a2) whose phase center (PC) lies within the time period of a receive sequence (RS) is obtained by weighting and combining the antenna diagrams of all receiving channels (RC1, RC2, RC3, RC4) for all radar echoes in the receive sequence (RS) based on the optimization target (s), wherein the number of second samples (a2) whose phase center lies within the time period of the receive sequence (RS), preferably corresponds to the product of the number of receiving channels (RC1, RC2, RC3, RC4) and the number of radar echoes (EC) in the receive sequence (RS).

7. The method according to one of the afore-mentioned claims, **characterized in that** the optimization target of the predetermined uniform distance between the phase centers (PC') of the second samples (a2) consists in determining for a respective second sample (a2) weights ($W_1$, $W_2$, ..., $W_M$) for the respective antenna diagrams of all receiving channels (RC1, RC2, RC3, RC4) for all radar echoes (EC) of the receive sequence (RS) in such a manner that the sum of the antenna diagrams weighted with these weights ($W_1$, $W_2$, ..., $W_M$) of all receiving channels (RC1, RC2, RC3, RC4) for all radar echoes (EC) of the receive sequence (RS) correspond to the following target antenna diagram $G_{GOAL}(f_d, n)$ associated with the respective second sample (a2), wherein, after determination of the weights, a respective second sample (a2) is calculated as the sum of first samples (a1) of the receiving sequence (RS) weighted by these weights ($W_1$, $W_2$, ..., $W_M$):

$$G_{GOAL}(f_d, n) = G_{common}(f_d) \cdot exp(-j \cdot 2 \cdot \pi \cdot t_{out}[n] \cdot f_d)$$

$$t_{out}[n] = \frac{n-1}{N_{ch} \cdot \overline{PRF}} + \delta t$$
where

where $f_d$ represents the Doppler frequency and thus a direction from the phase center (PC') of the respective second sample (a2) to an azimuth position on the earth's surface (GR);

where $n$ is an index of the second samples (a2), which are determined from the reception sequence (RS), where $1 \leq n \leq N_{ch} \cdot N$, where $N$ is the number of radar echoes in the receive sequence (RS), and where $N_{ch}$ corresponds to the number of receiving channels (RC1, RC2, RC3, RC4);

where $\overline{PRF}$ is the average of the time intervals ($PRI_0$, $PRI_1$, $PRI_2$, $PRI_n$) between consecutively received radar echoes (EC) within the receive sequence (RS);

where $\delta t$ is a predetermined time offset or zero;

where $G_{common}(f_d)$ is an equal common factor for all second samples (a2) obtained from the receive sequence (RS), wherein the common factor depends on characteristic magnitudes of the antenna diagrams for all receiving channels (RC1, RC2, RC3, RC4).

8. The method according to claim 7, **characterized in that** all the antenna diagrams of a respective receiving channel (RC1, RC2, RC3, RC4) contain the same antenna function ($G_k(f_d)$), which is independent from the phase centers (PC) of the antenna diagrams of the respective receiving channel (RC1, RC2, RC3, RC4) for the received radar echoes (EC), wherein the common factor $G_{common}(f_d)$ depends on the antenna functions of all receiving channels (RC1, RC2, RC3, RC4) and is preferably the average value of the antenna functions of all the receiving channels (RC1, RC2, RC3, RC4).

9. The method according to one of the afore-mentioned claims, **characterized in that** a receive sequence (RS) consists of at least five radar echoes (EC), preferably at least ten radar echoes (EC), and more preferably at least 30 radar echoes.

10. The method according to one of the afore-mentioned claims, **characterized in that** the optimization goal(s) are represented by a cost function which describes the optimization target(s) based on a cost term or a sum of several cost terms.

11. A synthetic aperture radar device for remote sensing of the Earth's surface (GR) comprising a multi-aperture radar system on a platform moving in an azimuth direction (x) above the Earth's surface (GR) during operation of the synthetic aperture radar device, wherein the multi-aperture radar system comprises a combined transmitting and receiving device (1), which is a transmitting device in transmission mode, which emits radar pulses (RP), and which is a receiving device in the receiving mode, which receives the radar echoes (EC) of these radar pulses (RP) reflected off the earth's surface (GR) via a plurality of receiving channels (RC1, RC2, RC3, RC4) with associated receivers, wherein the receivers of the receiving channels (RC1, RC2, RC3, RC4) are disposed on the platform so that they are offset relative to each other in the azimuth direction (x), wherein an antenna diagram with a phase center (PC) at an azimuth position (x) in the azimuth direction is associated with a respective receiving channel (RC1, RC2, RC3, RC4) for each radar echo (EC) received through it, coming from the same range position in a range direction (y), wherein the range direction (y) runs along the surface of the earth (GR) perpendicularly to the azimuth direction (x), wherein the transmitting device and the receiving device are designed in such a manner that:

- radar pulses (RP) are transmitted by the transmitting device at successive transmission times, wherein the time intervals ($PRI_0$, $PRI_1$, $PRI_2$, $PRI_n$) vary at least sometimes between successive transmission times;
- the radar echoes of the radar pulses (RP) are received by the receiving device via the respective receiving channels (RC1, RC2, RC3, RC4), whereby, for the radar echoes (EC) originating from the same range position (y), first samples (a1) are obtained for this range position, each corresponding to a receiving channel (RC1, RC2, RC3, RC4) for a received radar echo (EC), wherein a respective first sample (a1) is associated with the phase center (PC) of the antenna diagram of the corresponding receiving channel (RC1, RC2, RC3, RC4) for the received radar echo (EC);

**characterized in that**
the synthetic aperture radar device is equipped to convert the first samples (a1) for the same range position into second samples for that range position, by determining a respective second sample (a2) from the first samples (a1) in a receive sequence (RS) of several radar echoes (EC), which are successively received in the receiving device, in such a manner that the antenna diagrams of all receiving channels (RC1, RC2, RC3, RC4) are weighted and combined for all radar echoes (EC) of the receive sequence (RS) based on one or more optimization targets, wherein the or one of the optimization targets is a predetermined uniform local distance between the phase centers (PC') of the second samples (a2).

12. The synthetic aperture radar device according to claim 11, **characterized in that** the synthetic aperture radar apparatus is adapted to perform a method according to any one of claims 2 to 10.

13. A method for the computer-aided conversion of first samples (a1) into second samples (a2), wherein the first samples (a1) were generated by a synthetic aperture radar method according to the preamble of claim 1,
**characterized in that**
the first samples (a1) for the same range position are converted into second samples for that range position by determining a respective second sample (a2) from the first samples (a1) in a receive sequence (RS) of several radar echoes (EC), which are successively received in the receiving device, in such a manner that the antenna diagrams of all receiving channels (RC1, RC2, RC3, RC4) are weighted and combined for all radar echoes (EC) of the receive sequence (RS) based on one or more optimization targets, wherein the or one of the optimization targets is a predetermined uniform local distance between the phase centers (PC') of the second samples (a2).

14. A device for the computer-aided conversion of first samples (a1) into second samples (a2), wherein the first samples (a1) were generated by a synthetic aperture radar method according to the preamble of claim 1, **characterized in that** the device is equipped for carrying out a method according to claim 13.

**Revendications**

1. Procédé de radar à ouverture synthétique pour la télédétection de la surface terrestre (GR) au moyen d'un système radar à ouverture multiple sur une plateforme qui se déplace dans une direction azimutale (x) au-dessus de la surface terrestre (GR), où le système radar à ouverture multiple comprend un dispositif d'émission et de réception (1) qui, dans un mode d'émission, est un dispositif d'émission émettant des impulsions radar (RP) et qui, dans un mode de réception, est un dispositif de réception qui reçoit des échos radar (EC) de ces impulsions radar (RP) réfléchies par la surface terrestre (GR) par l'intermédiaire de plusieurs canaux de réception (RC1, RC2, RC3, RC4) avec des récepteurs associés, où les récepteurs des canaux de réception (RC1, RC2, RC3, RC4) sont disposés sur la plateforme de manière décalée dans la direction azimutale (x), où un diagramme de rayonnement avec un centre de phase (PC) en une position azimutale (x) dans la direction azimutale est associé à un canal de réception (RC1, RC2, RC3, RC4) respectif pour chacun des échos radar (EC) reçus par celui-ci et provenant de la même position de portée dans une direction de portée (y), où la direction de portée (y) s'étend le long de la surface terrestre (GR) perpendiculairement à la direction azimutale (x), où :

- des impulsions radar (RP) sont émises par le dispositif d'émission à des moments d'émission successifs, où les intervalles de temps ($PRI_0$, $PRI_1$, $PRI_2$, $PRI_n$) entre des moments d'émission successifs varient au moins quelquefois ;

- les échos radar des impulsions radar (RP) sont reçus par le dispositif de réception par l'intermédiaire des canaux de réception (RC1, RC2, RC3, RC4) respectifs, moyennant quoi, pour les échos radar (EC) provenant de la même position de portée (y), des premiers échantillons (a1) sont obtenus pour cette position de portée, qui correspondent respectivement à un canal de réception (RC1, RC2, RC3, RC4) pour un écho radar (EC) reçu, où un premier échantillon (a1) respectif est associé au centre de phase (PC) du diagramme de rayonnement du canal de réception (RC1, RC2, RC3, RC4) correspondant, pour l'écho radar (EC) reçu ;

**caractérisé en ce que**
les premiers échantillons (a1) pour la même position de portée sont convertis en des seconds échantillons pour cette position de portée, en déterminant un second échantillon (a2) respectif à partir des premiers échantillons (a1) dans une séquence de réception (RS) de plusieurs échos radar (EC), qui sont successivement reçus dans le dispositif de réception, de telle manière que les diagrammes de rayonnement de tous les canaux de réception (RC1, RC2, RC3, RC4) pour tous les échos radar (EC) de la séquence de réception (RS) sont pondérés et combinés en se fondant sur un ou plusieurs objectifs d'optimisation, où le ou l'un des objectifs d'optimisation est un espacement local régulier prédéterminé entre les centres de phase (PC') des seconds échantillons (a2).

2. Procédé selon la revendication 1, **caractérisé en ce que** plusieurs échos radar (EC) provenant de différentes positions de portée sont reçus simultanément par l'intermédiaire de plusieurs lobes de réception avec des angles d'élévation différents.

3. Procédé selon la revendication 1 ou 2, **caractérisé en ce qu'**en plus de l'objectif d'optimisation consistant en un espacement régulier prédéterminé entre les centres de phase (PC') des seconds échantillons (a2), les objectifs d'optimisation comprennent l'objectif d'optimisation supplémentaire consistant en un grand rapport signal/bruit pour les seconds échantillons (a2).

4. Procédé selon l'une des revendications précédentes, **caractérisé en ce que** le dispositif d'émission et de réception combiné est une antenne à réflecteur (1) avec un feed multicanal.

5. Procédé selon l'une des revendications précédentes, **caractérisé en ce que** les impulsions radar (RP) sont émises en séquences d'émission (SE) répétées de manière cyclique, où les moments d'émission à l'intérieur d'une séquence d'émission (SE) sont prédéfinis et les intervalles de temps ($PRI_0$, $PRI_1$, $PRI_2$, $PRI_n$) entre des moments d'émission successifs à l'intérieur de la séquence d'émission (SE) varient au moins une fois, où les échos radar (EC) des impulsions radar (RP) de séquences d'émission (SE) respectives successivement reçus forment des séquences de réception (RS) respectives pour déterminer des seconds échantillons (a2).

6. Procédé selon la revendication 5, **caractérisé en ce que** chaque second échantillon (a2) dont le centre de phase (PC) se trouve à l'intérieur d'une période de temps d'une séquence de réception (RS) est obtenu en pondérant et combinant les diagrammes de rayonnement de tous les canaux de réception (RC1, RC2, RC3, RC4) pour tous les échos radar dans la séquence de réception (RS) en se fondant sur le ou les objectifs d'optimisation, où le nombre des second échantillons (a2) dont le centre de phase se trouve à l'intérieur de la période de temps de la séquence de réception (RS) correspond de préférence au produit du nombre de canaux de réception (RC1, RC2, RC3, RC4) et du nombre d'échos radar (EC) dans la séquence de réception (RS).

7. Procédé selon l'une des revendications précédentes, **caractérisé en ce que** l'objectif d'optimisation consistant en un espacement régulier prédéterminé entre les centres de phase (PC') des seconds échantillons (a2) consiste à déterminer, pour un second échantillon (a2) respectif, des poids ($W_1$, $W_2$, ..., $W_M$) pour les diagrammes de rayonnement respectifs de tous les canaux de réception (RC1, RC2, RC3, RC4) pour tous les échos radar (EC) de la séquence de réception (RS) de telle manière que la somme des diagrammes de rayonnement de tous les canaux de réception (RC1, RC2, RC3, RC4) pour tous les échos radar (EC) de la séquence de réception (RS) pondérés avec ces poids ($W_1$, $W_2$, ..., $W_M$) correspond au diagramme d'antenne cible $G_{GOAL}(f_{d,n})$ suivant associé au second échantillon (a2) respectif, où après la détermination des poids, un second échantillon (a2) respectif est calculé en tant que somme des premiers échantillons (a1) de la séquence de réception (RS) pondérés avec ces poids ($W_1$, $W_2$, ..., $W_M$)

$$G_{GOAL}(f_d, n) = G_{common}(f_d) \cdot \exp(-j \cdot 2 \cdot \pi \cdot t_{out}[n] \cdot f_d),$$

$$t_{out}[n] = \frac{n-1}{N_{ch} \cdot \overline{PRF}} + \delta t;$$

où

où $f_d$ est la fréquence Doppler et donc une direction du centre de phase (PC') du second échantillon (a2) respectif à une position azimutale sur la surface terrestre (GR) ;

où $n$ est un index pour les seconds échantillons (a2) qui sont déterminés à partir de la séquence de réception (RS), où $1 \leq n \leq N_{ch} \cdot N$, où $N$ correspond au nombre d'échos radar dans la séquence de réception (RS) et où $N_{ch}$ correspond au nombre de canaux de réception (RC1, RC2, RC3, RC4) ;

où $\overline{PRF}$ est la moyenne des intervalles de temps (PRI$_0$, PRI$_1$, PRI$_2$, PRI$_n$) entre des échos radar (EC) reçus successivement à l'intérieur de la séquence de réception (RS) ;

où $\delta t$ est un décalage temporel prédéfini ou égal à zéro ;

où $G_{common}(f_d)$ est un facteur commun égal pour tous les seconds échantillons (a2) qui sont déterminés à partir de la séquence de réception (RS), où le facteur commun dépend de grandeurs caractéristiques des diagrammes de rayonnement pour tous les canaux de réception (RC1, RC2, RC3, RC4).

8. Procédé selon la revendication 7, **caractérisé en ce que** tous les diagrammes de rayonnement d'un canal de réception (RC1, RC2, RC3, RC4) respectif contiennent la même fonction d'antenne ($G_k(f_d)$), qui est indépendante des centres de phase (PC) des diagrammes de rayonnement du canal de réception (RC1, RC2, RC3, RC4) respectif pour les échos radar (EC) reçus, où le facteur commun $G_{common}(f_d)$ dépend des fonctions d'antenne de tous les canaux de réception (RC1, RC2, RC3, RC4) et est de préférence la moyenne des fonctions d'antenne de tous les canaux de réception (RC1, RC2, RC3, RC4).

9. Procédé selon l'une des revendications précédentes, **caractérisé en ce qu'**une séquence de réception (RS) consiste en au moins cinq échos radar (EC), de préférence au moins dix échos radar (EC) et plus préférablement au moins 30 échos radar.

10. Procédé selon l'une des revendications précédentes, **caractérisé en ce que** le ou les objectifs d'optimisation sont représentés par une fonction de coûts qui décrit le ou les objectifs d'optimisation sur la base d'un terme de coûts ou d'une somme de plusieurs termes de coûts.

11. Dispositif radar à ouverture synthétique pour la télédétection de la surface terrestre (GR) au moyen d'un système radar à ouverture multiple sur une plateforme qui se déplace dans une direction azimutale (x) au-dessus de la surface terrestre (GR) lors du fonctionnement du dispositif radar à ouverture synthétique, où le système radar à ouverture multiple comprend un dispositif d'émission et de réception (1) qui, dans un mode d'émission, est un dispositif d'émission émettant des impulsions radar (RP) et qui, dans un mode de réception, est un dispositif de réception qui reçoit des échos radar (EC) de ces impulsions radar (RP) réfléchies par la surface terrestre (GR) par l'intermédiaire de plusieurs canaux de réception (RC1, RC2, RC3, RC4) avec des récepteurs associés, où les récepteurs des canaux de réception (RC1, RC2, RC3, RC4) sont disposés sur la plateforme de manière décalée dans la direction azimutale (x), où un diagramme de rayonnement avec un centre de phase (PC) en une position azimutale (x) dans la direction azimutale est associé à un canal de réception (RC1, RC2, RC3, RC4) respectif pour chacun des échos radar (EC) reçus par celui-ci et provenant de la même position de portée dans une direction de portée (y), où la direction de portée (y) s'étend le long de la surface terrestre (GR) perpendiculairement à la direction azimutale (x), où le dispositif d'émission et le dispositif de réception sont conçus de telle manière que :

- des impulsions radar (RP) sont émises par le dispositif d'émission à des moments d'émission successifs, où les intervalles de temps (PRI$_0$, PRI$_1$, PRI$_2$, PRI$_n$) entre des moments d'émission successifs varient au moins quelquefois ;

- les échos radar des impulsions radar (RP) sont reçus par le dispositif de réception par l'intermédiaire des canaux de réception (RC1, RC2, RC3, RC4) respectifs, moyennant quoi, pour les échos radar (EC) provenant de la même position de portée (y), des premiers échantillons (a1) sont obtenus pour cette position de portée, qui correspondent respectivement à un canal de réception (RC1, RC2, RC3, RC4) pour un écho radar (EC) reçu, où un premier échantillon (a1) respectif est associé au centre de phase (PC) du diagramme de rayonnement du canal de réception (RC1, RC2, RC3, RC4) correspondant, pour l'écho radar (EC) reçu ;

**caractérisé en ce que**

le dispositif radar à ouverture synthétique est conçu pour convertir les premiers échantillons (a1) pour la même position de portée en des seconds échantillons pour cette position de portée, en déterminant un second échantillon (a2) respectif à partir des premiers échantillons (a1) dans une séquence de réception (RS) de plusieurs échos radar (EC), qui sont successivement reçus dans le dispositif de réception, de telle manière que les diagrammes de rayonnement de tous les canaux de réception (RC1, RC2, RC3, RC4) pour tous les échos radar (EC) de la séquence de réception (RS) sont pondérés et combinés en se fondant sur un ou plusieurs objectifs d'optimisation, où le ou l'un des objectifs d'optimisation est un espacement local régulier prédéterminé entre les centres de phase (PC') des seconds échantillons (a2).

12. Dispositif radar à ouverture synthétique selon la revendication 11, **caractérisé en ce que** le dispositif radar à ouverture synthétique est conçu pour la mise en œuvre d'un procédé selon l'une des revendication 2 à 10.

13. Procédé pour la conversion assistée par ordinateur de premier échantillons (a1) en seconds échantillons (a2), où les premiers échantillons (a1) ont été générés par un procédé de radar à ouverture synthétique selon le préambule de la revendication 1,
**caractérisé en ce que**
les premiers échantillons (a1) pour la même position de portée sont convertis en seconds échantillons pour cette position de portée, en déterminant un second échantillon (a2) respectif à partir des premiers échantillons (a1) dans une séquence de réception (RS) de plusieurs échos radar (EC), qui ont été successivement reçus dans le dispositif de réception, de telle manière que les diagrammes de rayonnement de tous les canaux de réception (RC1, RC2, RC3, RC4) pour tous les échos radar (EC) de la séquence de réception (RS) sont pondérés et combinés en se fondant sur un ou plusieurs objectifs d'optimisation, où le ou l'un des objectifs d'optimisation est un espacement local régulier prédéterminé entre les centres de phase (PC') des seconds échantillons (a2).

14. Dispositif pour la conversion assistée par ordinateur de premiers échantillons (a1) en seconds échantillons (a2), où les premiers échantillons (a1) ont été générés par un procédé de radar à ouverture synthétique selon le préambule de la revendication 1, **caractérisé en ce que** le dispositif est conçu pour la mis en œuvre d'un procédé selon la revendication 13.

Fig. 1

Fig. 2

EP 3 249 426 B1

Fig. 3

Fig. 4

**IN DER BESCHREIBUNG AUFGEFÜHRTE DOKUMENTE**

**In der Beschreibung aufgeführte Patentdokumente**

- DE 102012219225 A1

- DE 102005062031 A1

**In der Beschreibung aufgeführte Nicht-Patentliteratur**

- **GERHARD KRIEGER et al.** Advanced Concepts for High-Resolution Wide-Swath SAR Imaging. *8th European Conference on Synthetic Aperture Radar,* 07. Juni 2010, 524-527
- **LIU YADONG et al.** A novel ultra-wide swath SAR based on variable PRF and digital beamforming. *IET International Radar Conference,* 16. April 2013, 0081-0081

- **QIAN CHEN et al.** Investigation on an ultra-wide-swath, multipleelevation-beam SAR based on sweep-PRI. *IEEE Transactions on Aerospace and Electronic Systems,* 01. Oktober 2014, vol. 50 (4), 2998-3020